(19) Europäisches Patentamt / European Patent Office / Office européen des brevets

(11) **EP 2 804 310 B1**

(12) **EUROPEAN PATENT SPECIFICATION**

(45) Date of publication and mention
of the grant of the patent:
**30.09.2020 Bulletin 2020/40**

(51) Int Cl.:
*H02P 27/08* *(2006.01)*     *H02P 21/26* *(2016.01)*
*H02P 21/00* *(2016.01)*     *H02P 21/02* *(2006.01)*
*H02P 21/14* *(2016.01)*

(21) Application number: **12864705.4**

(22) Date of filing: **21.12.2012**

(86) International application number:
**PCT/JP2012/008213**

(87) International publication number:
**WO 2013/105187 (18.07.2013 Gazette 2013/29)**

(54) **INVERTER CONTROL DEVICE**

UMRICHTERSTEUERUNGSVORRICHTUNG

DISPOSITIF DE COMMANDE D'ONDULEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2012 JP 2012003719**

(43) Date of publication of application:
**19.11.2014 Bulletin 2014/47**

(73) Proprietor: **Panasonic Corporation
Kadoma-shi, Osaka 571-8501 (JP)**

(72) Inventor: **KAWAJI, Mitsuo
Osaka 540-6207 (JP)**

(74) Representative: **Eisenführ Speiser
Patentanwälte Rechtsanwälte PartGmbB
Postfach 31 02 60
80102 München (DE)**

(56) References cited:
EP-A1- 2 034 605          JP-A- 2002 051 589
JP-A- 2002 374 696      JP-A- 2009 100 558
JP-A- 2011 010 430      JP-A- 2011 010 430
JP-B2- 4 693 904          US-A1- 2011 031 910
US-A1- 2011 057 591

- VAEZ S ET AL: "Adaptive loss minimization control of inverter-fed IPM motor drives", POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA,IEEE, US, vol. 2, 22 June 1997 (1997-06-22), pages 861-868, XP010241651, DOI: 10.1109/PESC.1997.616825 ISBN: 978-0-7803-3840-1
- SILVERIO BOLOGNANI ET AL: "Online MTPA Control Strategy for DTC Synchronous-Reluctance-Motor Drives", IEEE TRANSACTIONS ON POWER ELECTRONICS, INSTITUTE OF ELECTRICAL AND ELECTRONICS ENGINEERS, USA, vol. 26, no. 1, 1 January 2011 (2011-01-01), pages 20-28, XP011340930, ISSN: 0885-8993, DOI: 10.1109/TPEL.2010.2050493
- WEINER C ET AL: "FLUX-LINKAGE CONTROL OF FULLY-PITCHED SWITCHED RELUCTANCE MOTORS", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. 8, 7 September 1999 (1999-09-07), pages 1-09, XP000878498, ISBN: 978-90-75815-04-7

## Description

### Technical Field

The present invention relates to inverter control devices which are configured that a smoothing portion constructed with a capacitor having a significantly-small capacitance is connected to an output terminal of a rectification portion, and that an output voltage largely pulses at a frequency twice the frequency of an AC power supply. More particularly, the present invention relates to devices adapted to drive an electrical motor, such as a brushless DC motor, at an arbitrary rotating speed.

### Background Art

An inverter control devices for driving an ordinary motor are adapted to rectify an AC power supply and smoothen the DC electric power resulted from the rectification, through a smoothing capacitor. The inverter control device is configured that the smoothened DC electric power is converted into AC electric power with an arbitrary rotating speed and an arbitrary voltage by an inverter, and this AC electric power is supplied to the motor. Such structures necessitate smoothing capacitors and, these smoothing capacitors cause capacity increases and cost increases. However, it is known that, if the inverter is configured that the smoothing capacitor is unnecessary or have a largely-reduced capacitance, this causes the DC voltage resulted from the rectification to pulse in synchronization with the AC power supply and exerts adverse influences on the motor such as increases of torque pulsations and reduction of the driving efficiency.

To cope therewith, in cases where the smoothing capacitor is made unnecessary or made to have a largely-reduced capacitance, in order to alleviate adverse influences on the motor due to pulsations of the DC voltage, there is a method which moves up the output timings of PWM signals for carrying forward the phase of the inverter output voltage, in saturation states where it is impossible to supply the motor with inverter output voltages corresponding to commanded voltage values (refer to Patent Literature 1, for example).

An inverter control device in Patent Literature 1 is adapted to weaken a field magnetic flux in a motor for restricting the voltage applied to the motor, when the DC voltage applied to an inverter is reduced due to pulsations thereof (which corresponds to so-called field weakening control). However, the inverter control device in Patent Literature 1 necessitates flowing an armature current for weakening the field magnetic flux in the motor, which raises concerns about adverse influences, such as increases of the armature current and reduction of the motor driving efficiency.

Therefore, there is a motor driving device adapted to suppress the armature current in a motor to a minimum value for alleviating reduction of the motor driving efficiency. This device is adapted to control the electric current such that the total amount of magnetic fluxes in the motor is maintained constant, for causing a field weakening operation to be performed naturally, when the voltage applied to the motor is restricted, in an inverter control device structured to necessitate no smoothing capacitor or structured to include a capacitor with a largely-reduced capacitance (refer to Patent Literature 2, for example).

A motor driving device in Patent Literature 2 is adapted to integrate the voltage difference between the voltage applied to a motor and the voltage drop (the winding resistance value $\times$ the electric current value) due to a winding resistance in the motor to calculate the total amount of magnetic fluxes in the motor (the vector composed of the magnetic flux generated from the stator side and the magnetic flux generated from the rotor side). Further, this motor driving device is adapted to perform proportional integral control, based on the magnetic-flux difference between a commanded magnetic flux and the calculated total magnetic flux value. Further, this motor driving device is adapted to control electric current of components (an orthogonal two-axis coordinate system) which contribute to the field weakening operation, according to the change of the voltage applied to the motor, such that the calculated total magnetic flux value has a constant value (the commanded magnetic flux).

Further, Patent Literature 2 describes reducing the commanded magnetic flux with increasing rotating speed of the motor, thereby reducing the total amount of magnetic fluxes to be maintained constant, along therewith, in order to enhance the effect of the field weakening control in a higher-speed range.

Further, Patent Document 2 also describes about measures against the phenomenon in which harmonic components in the input electric current are increased due to the occurrence of intervals during which the input electric current from the AC power supply is not conducted, due to regenerative energy from the motor. Patent Literature 2 describes a method which reduces the commanded electric-current values for the components which contribute to the field weakening operation (the orthogonal two-axis coordinate system), at the phases corresponding to the zero-crossing points of the AC power supply voltage, for suppressing the electric current in the direction of regenerative operations around the zero-crossing of the AC power supply voltage. Further, there is a method which employs, as an embedded magnetic field synchronous motor (IPM (interior permanent magnet) motor), a motor having such specifications as to alleviate the influence of the induced voltage generated by field magnets for increasing the ratio of the reluctance torque. There is suggested that any of these methods have the effect of suppressing harmonic components in the input electric current through the reduction of the regenerative energy.

There is also another method for suppressing the armature current in a motor to a minimum value for alleviating the reduction of the motor driving efficiency. Based on a commanded electric-current value for "field weakening control" determined from a limit value of the voltage applied to a motor, and based on a commanded electric-current value for "maximum torque control" determined from an electric-current phase which minimizes the amplitude of the armature current in the motor in current vectors generating the same torque, this method is adapted to make a comparison between the motor induced voltages determined from the respective commanded electric-current values. Further, this method is adapted to select a commanded electric current value which generates a smaller induced voltage (the field weakening control or the maximum torque control) for performing electric current control, in order to alleviate the reduction of the motor driving efficiency, while realizing stable driving of the motor (refer to Non-Patent Literature 1, for example).

Patent Literature 3 describes a control apparatus which controls a controlled variable of an electric rotating machine by manipulating an output voltage of a power converter circuit. The control apparatus includes a prediction section configured to predict the controlled variable for each of a plurality of cases where the power converter circuit is set in a corresponding one of a plurality of predetermined operating states. A feedback control section is provided which is configured to feedback-control the output voltage of the power converter circuit at a target value by manipulating the input parameters of the evaluation function.

Non-Patent Literature 2 describes an adaptive loss minimization control strategy presented for inverter-fed interior permanent magnet motor drives.

Non-Patent Literature 3 describes an online procedure for the automatic search of the maximum-torque-per-ampere operating region for a synchronous reluctance motor. The algorithm is based on a signal-injection method with a random-based perturbation pattern applied to a common direct-torque-controlled drive.

### Citation List

### Patent Literature

PLT 1: Unexamined Japanese Patent Publication No. H10-150795A
PLT 2: Japanese Patent No. 4693904
PLT 3 : US Patent Application No. 2011/0031910

### NON-PATENT Literature

NPL1: Tatsuya Nishihara, Shigeo Morimoto, and Masayuki Sanada, "Influences of Electrolytic-Capacitor-less-ness in IPMSM Speed Control System", 2009 National Convention of The Institute of Electrical Engineers of Japan, 4-067, pp. 116-117 (Part 4)
NPL2 : Article "Adaptive loss minimization control of inverter-fed IPM motor drives" of S. Vaez et al, POWER ELECTRONICS SPECIALISTS CONFERENCE, 1997, 28TH ANNUAL IEEE, ST. LOUIS, MO, USA, 22-27 JUNE 1997, NEW YORK, vol. 2, pages 861-868, ISBN: 978-0-7803-3840-1
NPL3: Article "Online MTPA Control Strategy for DTC Synchronous-Reluctance-Motor Drives" of Silverio Bolognani et al, IEEE TRANSACTIONS ON POWER ELECTRONICS, INSTITUTE OF ELECTRICAL AND ELECTRONICS ENGINEERS, USA, vol. 26, no. 1, 1 January 2011, pages 20-28, ISSN: 0885-8993

### Summary of Invention

### Technical Problem

However, inverter control devices having the aforementioned conventional structures are adapted to suppress the field weakening operations to a minimum necessary level for suppressing the armature current in the motor to a minimum value for alleviating the reduction of the motor driving efficiency, or are adapted to reduce the regenerative energy from the motor for suppressing harmonic components in the input electric current from the AC power supply by controlling the electric current in the direction of regenerative operations and/or by employing a motor having such specifications as to alleviate the influences of the induced voltage generated by the field magnets for increasing the ratio of the reluctance torque. Such inverter control devices having these conventional structures have the problem of impossibility of optimization of the efficiency of the entire motor driving system (the inverter control device including the motor).

The present invention was made to overcome the aforementioned problem in conventional structures and aims at optimizing the efficiency of an entire motor driving system in an inverter control device structured to include a capacitor with a small capacitance, by utilizing a motor having a higher ratio of a reluctance torque and controlling the regenerative energy from the motor.

**Solution to Problem**

The object of the present invention is defined by the subject matter of independent claim 1. Preferred embodiments are defined by the dependent claims.

The regenerative energy from the motor is controlled to be a predetermined value or less, which optimizes the efficiency of "the converter (the rectification portion + the smoothing portion) + the inverter (the DC/AC conversion portion)", thereby suppressing the input electric power to the motor to a minimum value for alleviating the reduction of the motor efficiency. This can optimize the efficiency of the entire system.

**Advantageous Effects of Invention**

The inverter control device according to the present invention is adapted to utilize a motor made to have a higher ratio of a reluctance torque and is adapted to control the regenerative energy from the motor, thereby optimizing the efficiency of the entire motor driving system.

**Brief Description of Drawings**

Fig. 1 is a diagram of the system structure of an inverter control device according to the present invention.

Fig. 2 is a diagram of the system structure of an inverter control device according to a second embodiment of the present application.

Fig. 3 is a diagram of the system structure of an inverter control device according to a third embodiment of the present application.

Fig. 4 is a chart illustrating an example of temporal changes in the state of the phase electric currents in a motor.

Fig. 5 is a chart illustrating an example of changes of PWM signals.

Fig. 6(a) is a diagram illustrating the states of electric currents flowing through the motor and a DC/AC conversion portion at Timing 1 during driving with the PWM signals in Fig. 5, Fig. 6(b) is a diagram illustrating the states of electric currents flowing therethrough at Timing 2, and Fig. 6(c) is a diagram illustrating the states of electric currents flowing therethrough at Timing 3.

Fig. 7 is a chart illustrating another example of changes of PWM signals.

Fig. 8(a) is a diagram illustrating the states of electric currents flowing through the motor and the DC/AC conversion portion at Timing 1 during driving with the PWM signals in Fig. 7, Fig. 8(b) is a diagram illustrating the states of electric currents flowing therethrough at Timing 2, and Fig. 8(c) is a diagram illustrating the states of electric currents flowing therethrough at Timing 3.

Fig. 9(a) is a chart of a first operation characteristic indicating the absolute value of an AC voltage and a smoothened voltage in the inverter control device according to the present invention, and Fig. 9(b) is a chart of a first operation characteristic indicating a bus current in the inverter control device according to the present invention.

Fig. 10(a) is a chart of a second operation characteristic indicating the absolute value of the AC voltage and the smoothened voltage in the inverter control device according to the present invention, and Fig. 10(b) is a chart of a second operation characteristic indicating the absolute value of the AC voltage and the smoothened voltage in the inverter control device according to the present invention.

Fig. 11 is a chart of characteristics of a total amount of regenerative energy and motor flux linkage, in the inverter control device according to the present invention.

Fig. 12(a) is a chart of characteristics of the total amount of regenerative energy and the efficiency of a converter (a rectification portion + a smoothing portion), in the inverter control device according to the present invention, Fig. 12(b) is a chart of characteristic of the total amount of regenerative energy and the efficiency of an inverter (the DC/AC conversion portion), and Fig. 12(c) is a chart of characteristic of the total amount of regenerative energy and the total efficiency.

Fig. 13 is a chart of a characteristic of a motor output torque in the inverter control device according to the present invention.

Fig. 14 is a schematic flowchart of a first processing flow in the inverter control device according to the present invention.

Fig. 15 is a schematic flowchart of a second processing flow in the inverter control device.

Fig. 16 is a chart of characteristics of the electric-current phase difference and the armature current, in the inverter control device according to the present invention.

## Description of Embodiments

(First Embodiment)

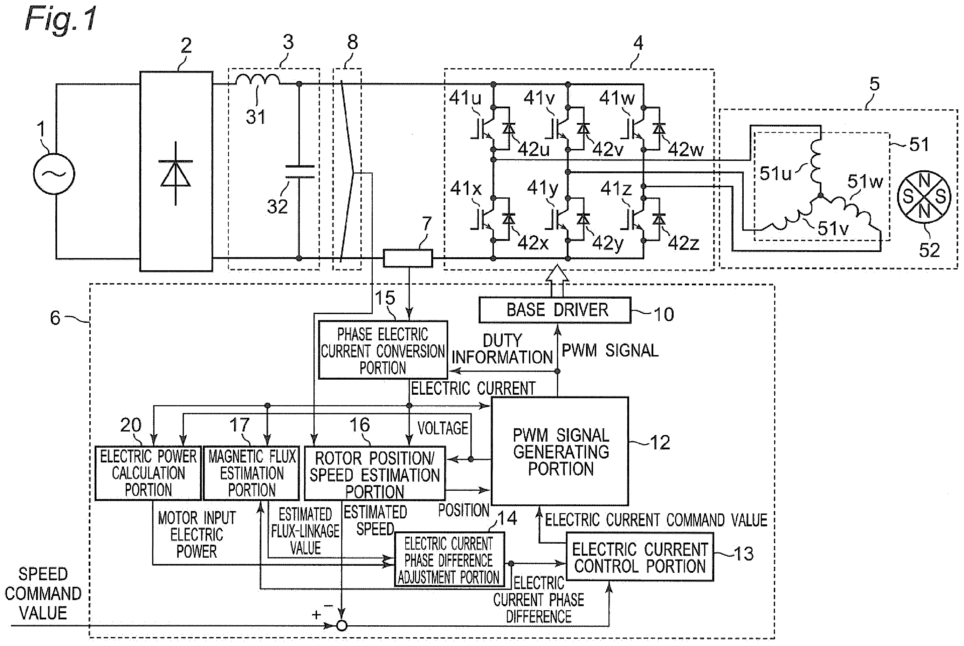

Fig. 1 is a diagram of the system structure of an inverter control device according to a first embodiment of the present invention. The inverter control device includes a rectification portion 2 adapted to be supplied with electric power from an AC power supply 1 as a single-phase AC power supply, such as a commercial power supply. The rectification portion 2 is constituted by a diode bridge adapted to perform full-wave rectification on the AC power supply 1 supplied thereto. Further, the inverter control device includes a smoothing portion 3 including a capacitor 32 having a value which is set so that the output voltage from the rectification portion 2 largely pulses at a frequency about twice the frequency of the AC power supply, a DC/AC conversion portion 4 adapted to convert the smoothened voltage from the smoothing portion 3 into an AC voltage having a desired frequency and a desired voltage value, and a driving control portion 6 adapted to transmit, to the DC/AC conversion portion 4, information for driving a motor 5 corresponding to the smoothened voltage.

The motor 5 includes a stator 51 provided with three armature windings (51u, 51v, 51w) which are Y-connected to one another about a neutral point, and a rotor 52 provided with magnets. The motor 5 is adapted to utilize a magnet torque and a reluctance torque, in combination with each other, so as to make the ratio of the reluctance torque higher. The magnet torque is generated by a field magnetic flux generated from the magnets in the rotor 52 and the armature current flowing through the armature windings (51u, 51v, 51w) in the stator 51, while the reluctance torque is generated by the armature current and inductance changes in the armature windings (51u, 51v, 51w).

The DC/AC conversion portion 4 includes half-bridge circuits which are each constituted by a pair of switching devices, in association with the three phases, which are the U, V, and W phases. The pair of switching devices in each half-bridge circuit are connected, in series, between the high-voltage-side end and the low-voltage-side end of the capacitor 32, and the smoothened voltage between the opposite ends of the capacitor 32 is applied to the half-bridge circuits. The half-bridge circuit for the U phase includes a high-voltage-side switching device 41u, and a low-voltage-side switching device 41x. The half-bridge circuit for the V phase includes a high-voltage-side switching device 41v, and a low-voltage-side switching device 41y. The half-bridge circuit for the W phase includes a high-voltage-side switching device 41w, and a low-voltage-side switching device 41z. Further, respective freewheeling diodes (42u to 42z) are connected in parallel to these switching devices (41u to 41z).

The smoothened voltage applied to the DC/AC conversion portion 4 is converted into a three-phase AC voltage through switching operations of the switching devices in the aforementioned DC/AC conversion portion 4, and is used for driving the motor 5. Further, in a DC-side bus line to/from the DC/AC conversion portion 4, there is provided an electric-current detection portion 7 adapted to detect the bus current.

The smoothing portion 3 is adapted such that the LC resonance frequency is 40 times or more the frequency of the AC power supply. Further, the smoothing portion 3 includes a reactor 31 for reducing the peak value of the inrush charging/discharging electric current into the capacitor 32 with a smaller capacitance.

The driving control portion 6 can be constituted by a microcomputer, a system LSI, and the like. The driving control portion 6 includes blocks which perform the respective functions of a base driver 10, a PWM signal generating portion 12, an electric-current control portion 13, an electric-current phase-difference adjustment portion 14, a phase-electric-current conversion portion 15, a rotor position/speed estimation portion 16, a magnetic-flux estimation portion 17, and an electric power calculation portion 20.

The phase-electric-current conversion portion 15 observes the bus current in the DC-side to/from the DC/AC conversion portion 4 and converts this bus current into an armature current in the motor 5. In actual, the phase-electric-current conversion portion 15 detects the electric current only during a predetermined time interval after converting the bus current in the DC-side to/from the DC/AC conversion portion 4.

The rotor position/speed estimation portion 16 estimates the rotating speed of the motor 5 and the rotor magnetic-pole positions therein, from information about the armature current in the motor 5 resulted from the conversion by the phase-electric-current conversion portion 15, an output voltage calculated by the PWM signal generating portion 12, and the smoothened voltage detected by a smoothened-voltage detection portion 8.

The electric-current control portion 13 derives an electric-current command value, through PI calculations and the like, such that the rotating speed of the motor 5 agrees with a speed command value, based on an electric-current phase difference supplied thereto from the electric-current phase-difference adjustment portion 14, and based on information about the deviation of the rotating speed of the motor 5 estimated by the rotor position/speed estimation portion 16 and the speed command value supplied from the outside.

The PWM signal generating portion 12 generates PWM signals for driving the motor 5, from the information based on the electric-current command value derived by the electric-current control portion 13, the armature current in the motor 5 resulted from the conversion by the phase-electric-current conversion portion 15, and the rotor magnetic-pole positions in the motor 5 which have been estimated by the rotor position/speed estimation portion 16.

The PWM signal generating portion 12 generates the PWM signals such that, for example, in a state where the smoothened voltage applied to the DC/AC conversion portion 4 is 200 V, when the U-phase commanded voltage is 150 V, the V-phase commanded voltage is 100 V, and the W-phase commanded voltage is 0 V, the duty of the PWM signal for each phase (the time ratio of the state during which the upper-arm switching device is ON to the carrier period of the PWM signal) is 75 % for the U phase, 50 % for the V phase, and 0 % for the W phase.

Namely, the division of the commanded voltage for each phase by the smoothened voltage results in the duty of the PWM signal. Further, when the commanded voltage for each phase is larger than the smoothed voltage, the duty of the PWM signal is 100 %.

The PWM signals determined as described above are finally outputted to the base driver 10, and the respective switching devices (41u to 41z) are driven according to the PWM signals, thereby generating an AC electric current with a sinusoidal-wave shape. As described above, in the embodiment of the present invention, such a sinusoidal-wave-shaped armature current is caused to flow, thereby realizing sinusoidal-wave driving of the motor 5.

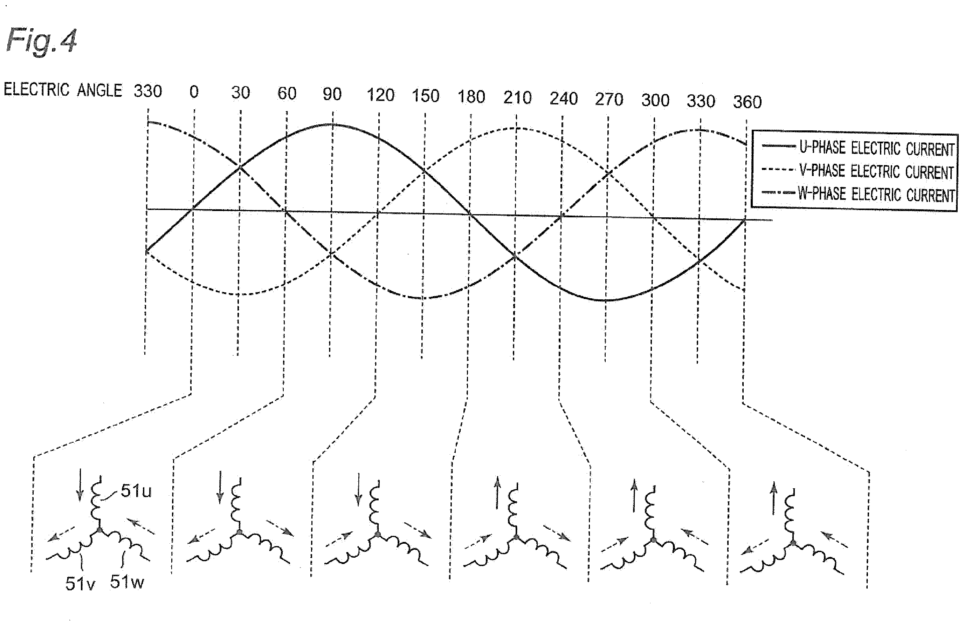

Next, with reference to Figs. 4 to 8, there will be described states where the armature current in the motor 5 appears, as the bus current flowing through the DC-side bus line to/from the DC/AC conversion portion 4.

Fig. 4 illustrates states of the armature current flowing through the armature windings in the motor 5, and the directions of the electric currents flowing through the armature windings for the respective phases, within respective sections at 60-degree-electric-angle intervals.

Referring to Fig. 4, within the section corresponding to the electric-angle range of 0 to 60 degrees, electric currents flow through the U-phase winding 51u and the W-phase winding 51w from their respective non-connected ends toward the neutral point, while an electric current flows through the V-phase winding 51v from the neutral point to its non-connected end. Further, within the section corresponding to the electric-angle range of 60 to 120 degrees, an electric current flows through the U-phase winding 51u from its non-connected end toward the neutral point, while electric currents flow through the V-phase winding 51v and the W-phase winding 51w from the neutral point toward their respective non-connected ends. Thereafter, there are illustrated the states of the changes of the phase electric currents flowing through the windings for the respective phases, at 60-degree-electric-angle intervals.

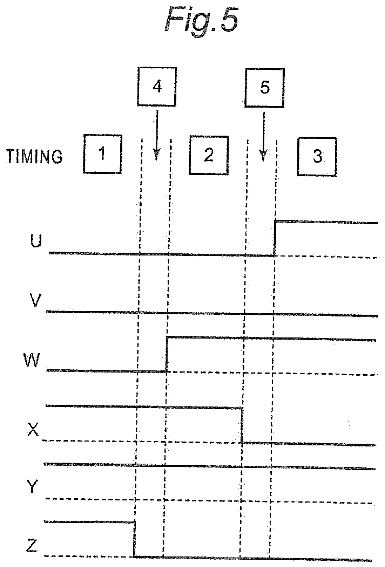

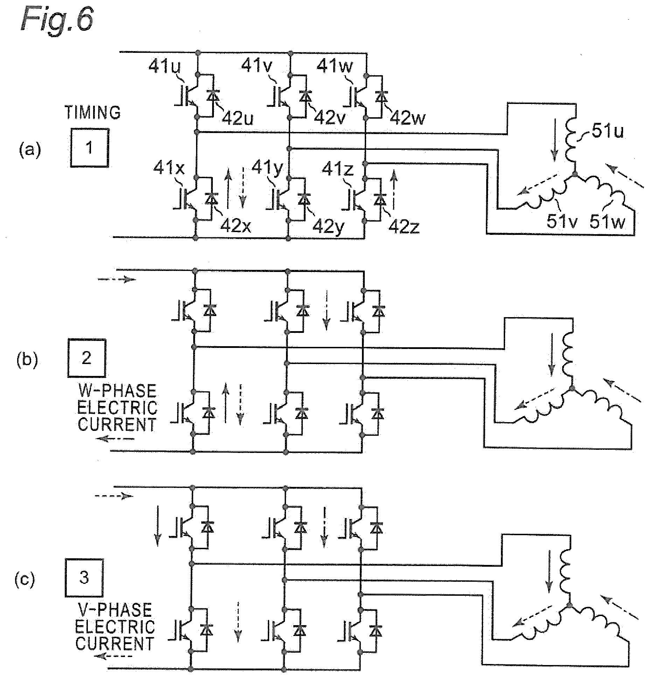

For example, there will be described a case where the PWM signals generated by the PWM signal generating portion 12, correspondingly to half the carrier period, are changed as in Fig. 5, at an electric angle of 30 degrees in Fig. 4. In this case, in Fig. 5, a signal U indicates a signal for driving the switching device 41u, a signal V indicates a signal for driving the switching device 41v, a signal W indicates a signal for driving the switching device 41w, a signal X indicates a signal for driving the switching device 41x, a signal Y indicates a signal for driving the switching device 41y, and a signal Z indicates a signal for driving the switching device 41z. These signals are illustrated in an active-high manner. Fig. 6 illustrates states of the electric currents flowing through the motor 5 and the DC/AC conversion portion 4, during driving through the PWM signals in Fig. 5. Figs. 6(a), 6(b), and 6(c) illustrate the states of the electric currents at Timing 1, Timing 2, and Timing 3, respectively. At Timing 1 illustrated in Fig. 6(a), no electric current appears in the DC-side bus line to/from the DC/AC conversion portion 4. At Timing 2 illustrated in Fig. 6(b), the armature current flowing through the W-phase winding 51w (the W-phase electric current) appears therein. At Timing 3 illustrated in Fig. 6(c), the armature current flowing through the V-phase winding 51v (the V-phase electric current) appears therein.

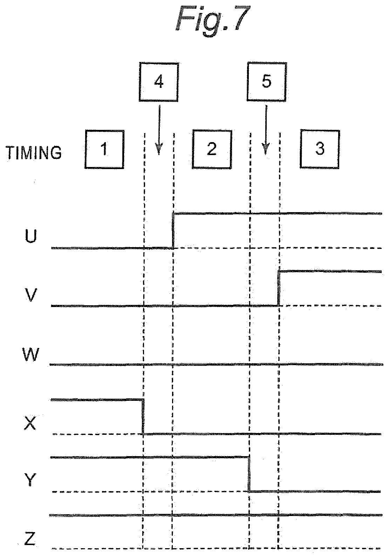

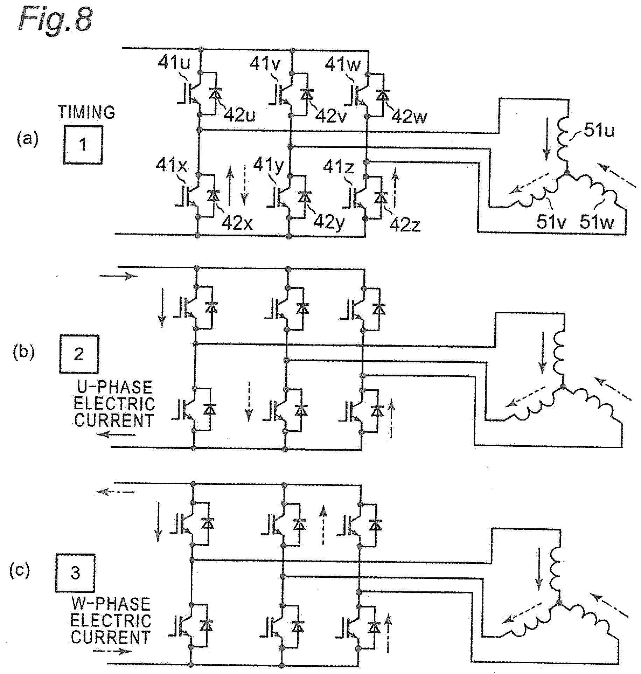

As another example, with reference to Fig. 8, there will be described a case where the PWM signals generated by the PWM signal generating portion 12, corresponding to half the carrier period, are changed as in Fig. 7, at an electric angle of 30 degrees in Fig. 4. In this case, at Timing 1 illustrated in Fig. 8(a), no electric current appears in the DC-side bus line to/from the DC/AC conversion portion 4. At Timing 2 illustrated in Fig. 8(b), the armature current flowing through the U-phase winding 51u (the U-phase electric current) appears therein. At Timing 3 illustrated in Fig. 8(c), the armature current flowing through the W-phase winding 51w (the W-phase electric current) appears therein. In this case, at the Timing 3, the bus current in the DC-side to/from the DC/AC conversion portion 4 is directed to flow from the low-voltage-side end of the capacitor 32 to the high-voltage-side end of the capacitor 32 through the DC/AC conversion portion 4, and there is illustrated a regenerative state where electric energy generated by the motor 5 is returned to the capacitor 32 (hereinafter, this electric energy will be referred to as regenerative energy).

It can be seen that a phase electric current in the motor 5 appears in the bus line to/from the DC/AC conversion portion 4, correspondingly to the states of the switching devices (41u to 41z).

More specifically, there is a relationship as follows. That is, in states where any one of the upper-arm switching devices (41u, 41v, 41w) is being ON, the armature current in the phase being ON appears in the bus line to/from the DC/AC conversion portion 4. Or, in states where any one of the lower-arm switching devices (41x, 41y, 41z) is being ON, the armature current in the phase being ON appears in the bus line to/from the DC/AC conversion portion 4.

It is obvious that, if it is possible to determine the electric currents in two phases at timings close to each other within the carrier period as described above, it is possible to determine the armature currents (iu, iv, iw) for the respective phases, according to the relationship expressed by the following Equation 1.
[Math 1]

$$ iu + iv + iw = 0 \quad \dots (1) $$

Further, Timing 4 and Timing 5 illustrated in Figs. 5 and 7 are dead-time intervals for preventing short-circuits among the upper and lower arms in the DC/AC conversion portion 4, due to delays of operations of the switching devices (41u to 41z). Within these dead-time intervals, the bus current to/from the DC/AC conversion portion 4 is inconstant, depending on the directions of the flows of the armature currents for the respective phases.

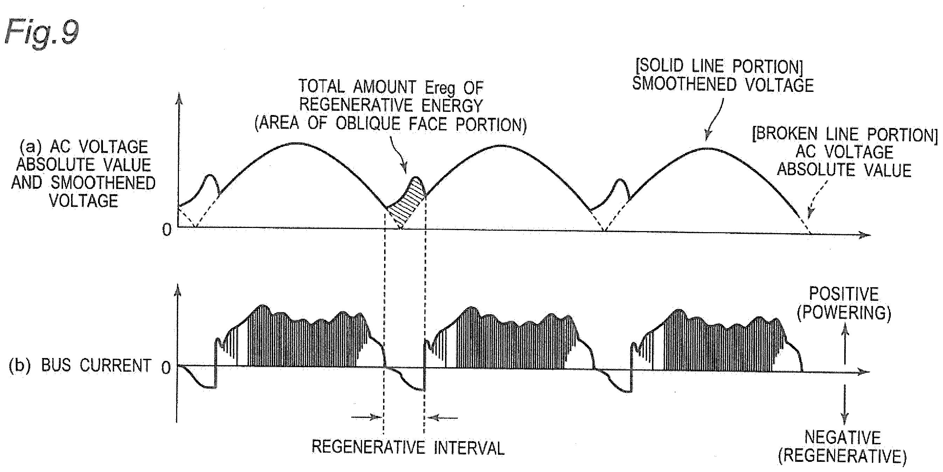

Fig. 9(a) illustrates a first operation characteristic indicating the absolute value of the AC voltage and the smoothened voltage, in the inverter control device according to the present invention. Fig. 9(b) illustrates the first operation characteristic indicating the bus current, in the inverter control device according to the present invention. Fig. 9(a) and Fig. 9(b) illustrate the waveforms of the absolute value (a broken-line portion in Fig. 9(a)) of the AC voltage of the AC power supply 1, the smoothened voltage (a solid-line portion in Fig. 9(a)) applied to the DC/AC conversion portion 4, and the bus current (Fig. 9(b)) in the DC-side to/from the DC/AC conversion portion 4, which flows through the electric-current detection portion 7.

The inverter control device according to the present invention employs the capacitor 32 having a significantly-small capacitance. Therefore, when an electric current flows through the motor 5, the smoothened voltage applied to the DC/AC conversion portion 4 largely pulses at a frequency about twice the power-supply frequency fs of the AC power supply 1.

The waveform of the bus current in the DC-side to/from the DC/AC conversion portion 4, which flows through the electric-current detection portion 7, is illustrated, assuming that the direction of the flow from the DC/AC conversion portion 4 to the low-voltage-side end of the capacitor 32 is positive and, on the contrary, the direction of the flow from the low-voltage-side end of the capacitor 32 to the DC/AC conversion portion 4 is negative. The waveform of the bus current is a pulse-shaped waveform corresponding to the operations of the respective switching devices (41u to 41z) in the DC/AC conversion portion 4.

As illustrated in Fig. 9(b), in the inverter control device structured to include the capacitor 32 having a smaller capacitance, intervals (hereinafter, referred to as regenerative intervals) during which the bus current in the DC-side to/from the DC/AC conversion portion 4 is negative, may be generated around the zero-crossing of the power-supply voltage of the AC power supply 1. During these regenerative intervals, the regenerative energy from the motor 5 is charged in the capacitor 32.

The total amount Ereg of regenerative energy charged in the capacitor 32 can be determined, by integrating the difference between the smoothened voltage Vdc applied to the DC/AC conversion portion 4, and the absolute value |Vac| of the AC voltage of the AC power supply 1, as in Equation 2. Namely, the total amount Ereg of the regenerative energy corresponds to the area of the oblique-line portion in Fig. 9(a).
[Math 2]

$$ Ereg = \int (Vdc - |Vac|) \, dt \quad \dots (2) $$

The total amount Ereg of regenerative energy largely relates to the specifications of the motor 5, and the load conditions of the motor 5 (the rotating speed, the load torque, the ambient temperature, and the like), as well as to the AC voltage value of the AC power supply 1, the capacities of the reactor 31, and the capacitor 32 in the smoothing portion 3. Particularly, attention is focused on the flux linkage (the d-axis flux linkage) which contributes to the induced voltage generated by the motor 5, and/or on the flux linkage (the primary flux linkage) which contributes to the applied voltage necessary for driving the motor 5.

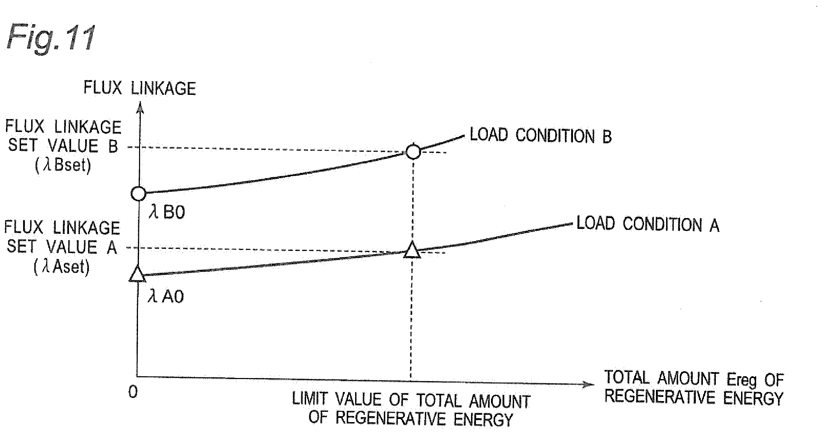

Fig. 11 illustrates characteristics of the total amount Ereg of regenerative energy, and the flux linkage (the d-axis flux linkage / the primary flux linkage) in the motor 5 controlled by the driving control portion 6, under different two load conditions (A and B). The total amount Ereg of regenerative energy increases as the flux linkage (the d-axis flux linkage / the primary flux linkage) in the motor 5 increases and, thus, there is a monotonous-increasing relationship therebetween.

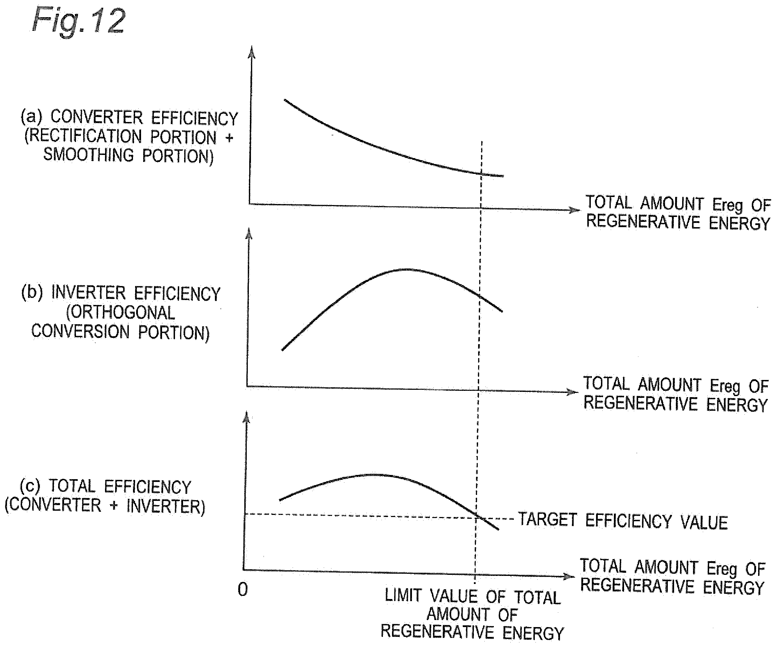

Fig. 12(a) illustrates a characteristic of the efficiency of the converter (the rectification portion 2 + the smoothing portion 3) with respect to the total amount Ereg of regenerative energy. Fig. 12(b) illustrates a characteristic of the efficiency of the inverter (the DC/AC conversion portion 4), and Fig. 12(c) illustrates a characteristic of the total efficiency with respect to the total amount Ereg of regenerative energy. As illustrated in Fig. 12(c), if the total amount Ereg of regenerative energy excessively increases, the total efficiency of "the converter (the rectification portion 2 + the smoothing portion 3) + the inverter (the DC/AC conversion portion 4)" is reduced. Therefore, the inverter control device according to the present invention is adapted to provide a limit value of the total amount Ereg of regenerative energy for controlling the total amount Ereg of regenerative energy from the motor 5 such that it is equal to or less than the limit value, in order to realize a total efficiency with a minimum necessary value (a preliminarily-set target efficiency value).

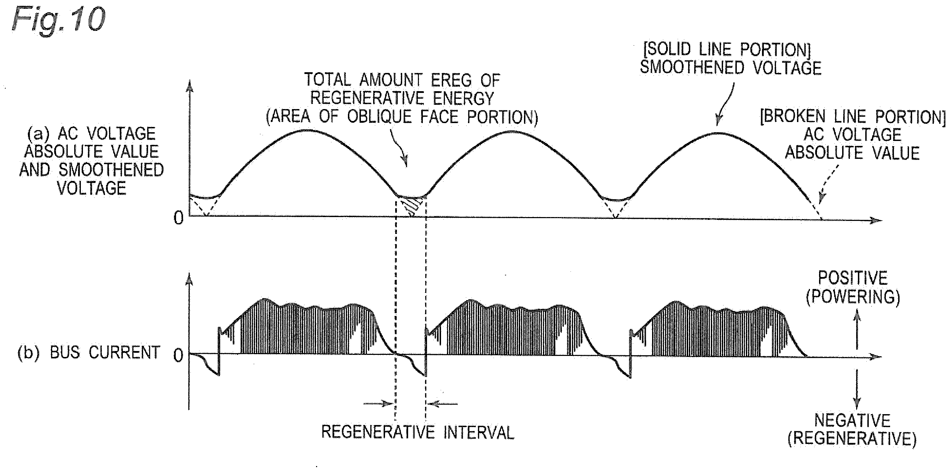

With reference to Fig. 10(a) and Fig. 10(b), there will be described examples of operations of when the total amount Ereg of regenerative energy is controlled to be equal to or less than the limit value. Fig. 10(a) illustrates a second operation characteristic illustrating the absolute value of the AC voltage and the smoothened voltage in the inverter control device according to the present invention. Fig. 10(b) illustrates the second operation characteristic illustrating the absolute value of the AC voltage and the smoothened voltage, in the inverter control device according to the present invention. Fig. 10(a) and Fig. 10(b) illustrate the waveforms of the absolute value (a broken-line portion in Fig. 10(a)) of the AC voltage from the AC power supply 1, the smoothened voltage (a solid-line portion in Fig. 10(a)) applied to the DC/AC conversion portion 4, and the bus current (Fig. 10(b)) in the DC-side to/from the DC/AC conversion portion 4, which flows through the electric-current detection portion 7, similarly to Fig. 9(a) and Fig. 9(b).

Referring to Fig. 10(a) and Fig. 10(b), not only the total amount Ereg of regenerative energy but also the regenerative intervals are reduced, in comparison with those in Fig. 9(a) and Fig. 9(b). This results in reduction of the reactive electric power caused by the regenerative energy charged in the capacitor 32 from the motor 5.

In order to indirectly detect the total amount of Ereg of regenerative energy, in view of the monotonously-increasing relationship in Fig. 11, a method for estimating the flux linkage (the d-axis flux linkage / the primary flux linkage) in the motor 5 controlled by the driving control portion 6 is employed. Further, there is provided a flux-linkage set value (d-axis flux-linkage set value / primary flux-linkage set value) for the motor 5, which corresponds to the limit value of the total amount Ereg of regenerative energy.

Further, since the flux linkage in the motor 5 also depends on the load conditions (the rotating speed, the load torque, the ambient temperature, and the like), as illustrated in Fig. 11, a plurality of flux-linkage set values should be preliminarily provided in the form of table data in association with respective rotating speeds, for example, in view of results of real-machine tests, results of simulation analyses, and the like (in Fig. 11, there are provided respective flux-linkage set values ($\lambda$Aset, $\lambda$Bset), for different two load conditions (A and B)).

Further, each flux-linkage set value (d-axis flux-linkage set value / primary flux-linkage set value) is preferably set to be 2.5 times or less the flux linkage of when the regenerative energy charged in the capacitor 32 from the motor 5 is zero, as in Equation 3, in view of results of real-machine tests, results of simulation analyses and the like (for example, in the case of the load condition A in Fig. 11, assuming that the flux linkage is $\lambda$A0 when the regenerative energy from the motor 5 is zero, the flux-linkage set value $\lambda$Aset should be set so as to satisfy the condition of Equation 3). By setting them as described above, it is possible to certainly control the regenerative energy from the motor 5 such that it is equal to or less than a predetermined value, thereby optimizing the efficiency of "the converter (the rectification portion 2 + the smoothing portion 3) + the inverter (the DC/AC conversion portion 4)".

[Math 3]

$$\lambda \mathrm{A}\,s\,e\,t \leqq 2.\,5 \times \lambda \mathrm{A}\,0 \quad \dots (3)$$

In the inverter control device according to the present invention, the magnetic-flux estimation portion 17 estimates the flux linkage in the motor 5. Furthermore, the electric-current phase-difference adjustment portion 14 performs a phase adjustment on the phase difference between the electric current and the induced voltage generated by the motor 5, such that the estimated flux-linkage value is equal to or less than the preliminarily-set flux-linkage set value and also, the average value of the input electric power of the motor 5 which is calculated by the electric power calculation portion 20 is minimized.

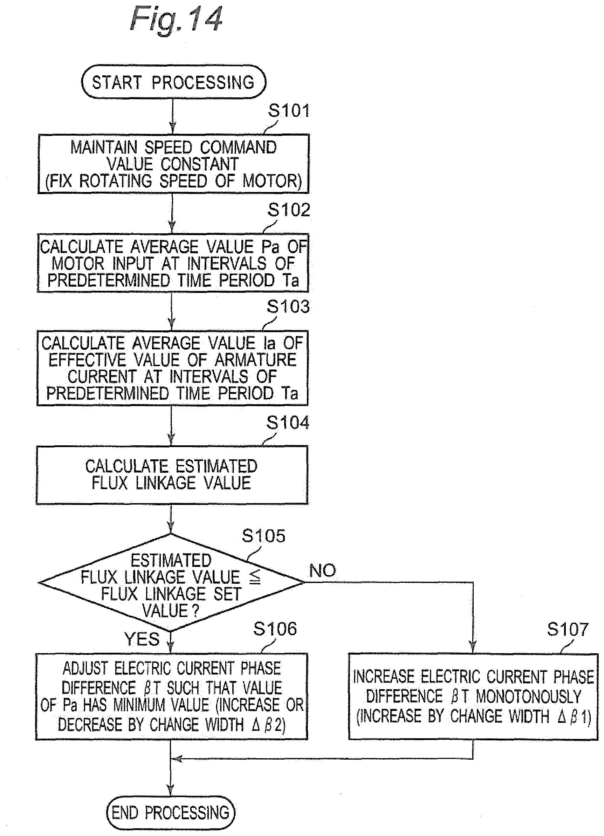

Hereinafter, with reference to Fig. 14, the magnetic-flux estimation portion 17, the electric power calculation portion 20, and the electric-current phase-difference adjustment portion 14, which are characteristics in the inverter control device according to the present invention, will be described, in detail, regarding operations thereof.

Fig. 14 illustrates a first processing flow in the inverter control device according to the present invention. Hereinafter, the flow illustrated in Fig. 14 will be described. The inverter control device according to the present invention employs the capacitor 32 having a significantly-smaller capacitance, which causes the armature current in the motor 5 to largely pulse. Therefore, prior to the estimation of the flux linkage in the motor 5 by the magnetic-flux estimation portion 17, the motor 5 is fixed at a predetermined rotating speed (one of the plural rotating speeds in the aforementioned table data, for example), while the speed command value provided from the outside is maintained constant (S101).

Next, the electric power calculation portion 20 calculates the average value Pa of the input electric power to the motor 5, from the output voltage calculated by the PWM signal generating portion 12, and from the armature current resulted from the conversion by the phase-electric-current conversion portion 15, at intervals of a predetermined time period Ta, according to Equation 4 (S102).
[Math 4]

$$\mathrm{P a} = \Sigma \ \{ ( \mathrm{v d} \times \mathrm{i d} + \mathrm{v q} \times \mathrm{i q} ) \times \Delta \mathrm{T} \} \ / \ \mathrm{T a} \ \ldots (4)$$

In Equation 4, "vd" is the d-axis output voltage, "vq" is the q-axis output voltage, "id" is the detected d-axis electric current value, "iq" is the detected q-axis electric current value. The output voltage and the armature current have been obtained by performing a coordinate transformation from the three-phase AC coordinate system (u, v, w) to a rotating coordinate system (d, q).
Next, the magnetic-flux estimation portion 17 calculates the average value Ia of the effective value of the armature current resulted from the conversion by the phase-electric-current conversion portion 15, at intervals of the predetermined time period Ta that is preliminarily set, at first, according to Equation 5 (S103).
[Math 5]

$$\mathrm{I a} = \Sigma \ \{ \sqrt{} \ ( \mathrm{i d}^{\char`\^}2 + \mathrm{i q}^{\char`\^}2 ) \ / \sqrt{} \ ( 3 ) \times \Delta \mathrm{T} \} \ / \ \mathrm{T a} \ \ldots (5)$$

In Equation 5, "id" is the detected d-axis electric-current value, "iq" is the detected q-axis electric-current value, "id^2" is the square of "id", and "iq^2" is the square of "iq". The armature current has been obtained by performing a coordinate transformation from the three-phase AC coordinate system (u, v, w) to a rotating coordinate system (d, q).
Further, it is preferable that the predetermined time period Ta is set to be an integer multiple of the variation period of the smoothened voltage.
The flux linkage in the orthogonal two-axis coordinate system is calculated, based on the average value Ia of the effective value of the armature current which has been calculated as described above, and based on the respective preliminarily-set factors (the d-axis inductance Ld, the q-axis inductance Lq, and the electromotive force coefficient A) of the motor 5 (S104).
[Math 6]

$$\lambda \ \mathrm{d a} = \Lambda + \mathrm{L d} \times \mathrm{i d a} \ \ldots (6)$$

[Math 7]

$$\lambda \ \mathrm{q a} = \mathrm{L q} \times \mathrm{i q a} \ \ldots (7)$$

[Math 8]

$$\lambda \ 1 \ \mathrm{a} = \sqrt{} \ ( \lambda \ \mathrm{d a}^{\char`\^}2 + \lambda \ \mathrm{q a}^{\char`\^}2 ) \ \ldots (8)$$

[Math 9]

$$\mathrm{i d a} = -\sqrt{} \ ( 3 ) \times \mathrm{I a} \times \mathrm{s i n} \ ( \beta \ \mathrm{T} ) \ \ldots (9)$$

[Math 10]

$$\mathrm{i q a} = \sqrt{} \ ( 3 ) \times \mathrm{I a} \times \mathrm{c o s} \ ( \beta \ \mathrm{T} ) \ \ldots (10)$$

In Equations 6-10, "ida" is the d-axis electric-current average value, "iqa" is the q-axis electric-current average value, "βT" is the electric-current phase-difference set value, "λda" is the d-axis flux-linkage average value, "λqa" is the q-axis flux-linkage average value, "λda^2" is the square of "λda", "λqa^2" is the square of "λqa", and "λ1a" is the primary flux-linkage average value.

As described above, the magnetic-flux estimation portion 17 is enabled to calculate the flux linkage in the motor 5 through the calculations according to the aforementioned Equations 5 to 10, which eliminates the necessity of provision of an additional sensor or the like for detecting the flux linkage, thereby offering an advantage in terms of the cost.

Further, in cases where sufficient control performance can be ensured with only the d-axis flux-linkage average value λda, it is also possible to eliminate the processes for calculating the q-axis flux-linkage average value λqa and/or the primary flux linkage average value λ1a, and the like, for the sake of reduction of the time required for processing with the microcomputer, the system LSI, and the like, or for other sakes.

Next, the electric-current phase-difference adjustment portion 14 determines whether or not the estimated flux-linkage value (the d-axis flux-linkage average value λda / the primary flux-linkage average value λ1a) estimated by the magnetic-flux estimation portion 17 is equal to or less than the preliminarily-set flux-linkage set value (d-axis flux-linkage set value / primary flux-linkage set value), at first (S105). If the estimated flux-linkage value is larger than the flux-linkage set value in S105, the electric-current phase difference βT is monotonously increased in steps of a predetermined change width Δβ1 for performing field weakening operations, until the estimated flux-linkage value (the d-axis flux-linkage average value λda / the primary flux-linkage average value λ1a) gets to be equal to or less than the flux-linkage set value (d-axis flux-linkage set value / primary flux-linkage set value) (S107). In the aforementioned way, the total amount Ereg of the regenerative energy from the motor 5 can be controlled to be equal to or less than the predetermined limit value.

If the estimated flux-linkage value (the d-axis flux-linkage average value λda / the primary flux-linkage average value λ1a) is equal to or less than the flux-linkage set value (d-axis flux-linkage set value / primary flux-linkage set value) in S105, the electric-current phase-difference adjustment portion 14 operates to change the electric-current phase difference βT by a predetermined change width Δβ2 (which is a change width smaller than Δβ1). The electric-current phase-difference adjustment portion 14 adjusts the electric-current phase difference βT such that the value of Pa is a minimum value, based on the difference in the average value Pa (which has been calculated according to Equation 4) of the motor input electric power between before and after the change of the electric-current phase difference βT (S106).

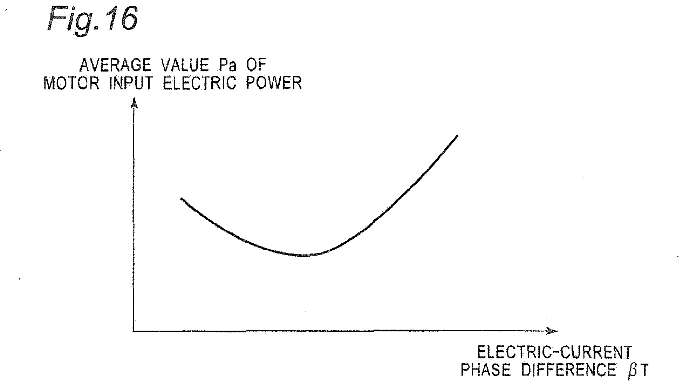

More specifically, as illustrated in Fig. 16, the average value Pa of the motor input electric power changes with respect to the electric-current phase difference βT along a quadratic function having a minimum value. Therefore, at first, the electric-current phase difference βT is increased by an amount Δβ2 of change. Further, if, after the change of the electric-current phase difference βT, Pa has changed in the direction of decreasing from that before the change of the electric-current phase difference βT, the electric-current phase difference βT is further increased by Δβ2. On the contrary, if, after the change of the electric-current phase difference βT, Pa has changed in the direction of increasing from that before the change of the electric-current phase difference βT, the electric-current phase difference βT is decreased by Δβ2. By adjusting the electric-current phase difference βT in the aforementioned way, it is possible to make the value of Pa to be a minimum value.

As described above, the regenerative energy from the motor 5 is controlled to be equal to or less than a predetermined value for optimizing the efficiency of "the converter (the rectification portion 2 + the smoothing portion 3) + the inverter (the DC/AC conversion portion 4)" (realizing a total efficiency with a minimum necessary value (a preliminarily-set target efficiency value)). Further, the input electric power to the motor 5 is suppressed to a minimum value, thereby alleviating the reduction of the motor efficiency. This can optimize the efficiency of the entire system.

Further, although, in the aforementioned description, the magnetic-flux estimation portion 17 calculates the estimated flux-linkage value, using the average value Ia of the effective value of the armature current resulted from the conversion by the phase-electric-current conversion portion 15, it is also possible to use the average value Ipa of the peak value of the armature current resulted from the conversion by the phase-electric-current conversion portion 15, as in Equation 5a.

[Math 11]

$$\mathrm{Ipa} = \Sigma\ \{\sqrt{}\ (\mathrm{id}\,\hat{}\,2 + \mathrm{iq}\,\hat{}\,2)\ \times\sqrt{}\ (2\diagup3)\ \times\Delta\mathrm{T}\}\diagup\mathrm{Ta}$$

$$\ldots (5a)$$

In this case, the d-axis electric-current average value "ida", and the q-axis electric-current average value "iqa" can be calculated according to Equations 9a and 10a, and the estimated flux-linkage value can be calculated through the calculations according to Equations 6 to 8.

[Math 12]

$$i \ d \ a = -\sqrt{} \ (3 \diagup 2) \ \times I \ p \ a \times s \ i \ n \ (\beta T) \dots (9a)$$

[Math 13]

$$i \ q \ a = \sqrt{} \ (3 \diagup 2) \ \times I \ p \ a \times c \ o \ s \ (\beta T) \dots (10a)$$

Further, as another method, the magnetic-flux estimation portion 17 can use the average value Ia* of the electric-current command value set by the electric-current control portion 13 (which corresponds to the average value of the effective value of the armature current), as in Equation 5b.
[Math 14]

$$I \ a \ast = \Sigma \ \{\sqrt{} \ (i \ d \ast \ \hat{} \ 2 + i \ q \ast \ \hat{} \ 2) \diagup \sqrt{} \ (3) \ \times \Delta T\} \diagup T \ a$$
$$\dots (5b)$$

In Equation 5b, "id*" is the d-axis electric-current command value, "iq*" is the q-axis electric-current command value, "id*^2" is the square of "id*", and "iq*^2" is the square of "iq*". In this case, the estimated flux-linkage value can be calculated, using "Ia*", instead of "Ia" in Equations 8 and 9.
Further, although, in the aforementioned description, the electric power calculation portion 20 calculates the average value Pa of the input electric power to the motor 5, using the armature current (id, iq) resulted from the conversion by the phase-electric-current conversion portion 15, it is also possible to calculate the average value Pa* of the input electric power to the motor 5, using the electric-current command value (id*, iq*).
[Math 15]

$$P \ a \ast = \Sigma \ \{(v \ d \times i \ d \ast + v \ q \times i \ q \ast) \ \times \Delta T\} \diagup T \ a$$
$$\dots (4a)$$

In this case, the electric-current phase-difference adjustment portion 14 can be adapted to adjust the electric-current phase different βT, using "Pa*" instead of "Pa", such that the value of "Pa*" is a minimum value.
Hereinafter, there will be described, in detail, a method for determining the specifications of the reactor 31 having a smaller capacity and the capacitor 32 having a smaller capacity, regarding the inverter control device according to the present application.
In the inverter control device according to the present application the combination of the reactor 31 and the capacitor 32 is determined, such that the resonance frequency fLC of the reactor 31 and the capacitor 32 is 40 times or more the power supply frequency fs (such that the constraint of fLC ≥ (40 × fs) is satisfied), in order to suppress harmonic components in the input electric current from the AC power supply 1 for clearing the IEC standard.
In this case, assuming that the capacity of the reactor is L1 [H] and the capacity of the capacitor 32 is C1[F], the resonance frequency fLC is expressed as in Equation 11.
[Math 16]

$$f \ L \ C = 1 \diagup \ \{2 \ \pi \times \sqrt{} \ (L \ 1 \times C \ 1)\} \dots (11)$$

For example, assuming that the power-supply frequency is 50 Hz, and the capacity of the capacitor 32 is 10 μF, the capacity of the reactor 31 should be selected within the range of L1 ≤ 0.633 [mH], according to the aforementioned constraint and Equation 11.
By determining the combination of the reactor 31 having the smaller capacity and the capacitor 32 having the smaller capacity as described above, it is possible to realize higher performance regarding power-supply harmonic characteristics of the input electric current from the AC power supply 1.
Hereinafter, there will be described, in detail, a method for determining the specifications of the motor 5, regarding the inverter control device according to the present application.
The motor 5 in the inverter control device according to the present application. is adapted to utilize a magnet torque and a reluctance torque, in combination with each other, so as to make the ratio of the reluctance torque higher.

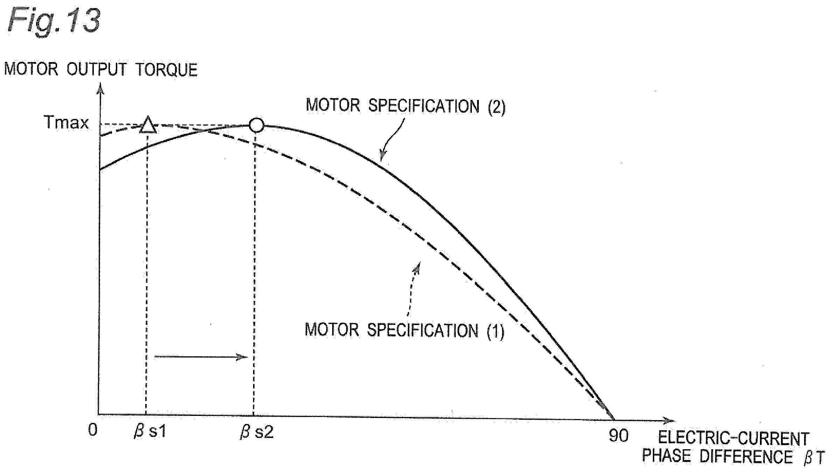

The magnet torque is generated by a field magnetic flux generated from the magnets in the rotor 52 and the armature current flowing through the armature windings (51u, 51v, 51w) in the stator 51, while the reluctance torque is generated by the armature current and inductance changes in the armature windings (51u, 51v, 51w). There will be described differences thereof from conventional motor specifications which mainly utilize magnet torques, with reference to Fig. 13.

Fig. 13 illustrates characteristics of the motor output torques (the synthetic torque composed of the magnet torque and the reluctance torque) which are provided by a conventional motor specification (1) which mainly utilizes a magnet torque (1), and a motor specification (2) which has a higher ratio of the reluctance torque regarding the inverter control device according to the present application. The motor specifications are determined, such that their maximum output torques Tmax are equal to each other and also, when the maximum output torque Tmax can be obtained, the electric-current phase difference $\beta T$ for the motor specification (1) is $\beta s1$ while the electric-current phase difference $\beta T$ for the motor specification (2) is $\beta s2$, which is larger than $\beta s1$, under conditions where the average value Ia of the effective value of the armature current is the same ($\beta s2$ can have the range of $\beta s1 < \beta s2 \leq 45$ [deg]).

Further, as described above, the magnetic-flux estimation portion 17 is adapted to estimate the flux linkage in the motor 5 to indirectly detect the total amount Ereg of regenerative energy from the motor 5. The electric-current phase-difference adjustment portion 14 is adapted to adjust the electric-current phase difference $\beta T$ such that the estimated flux-linkage value is equal to or less than a preliminarily-set flux linkage, thereby controlling the total amount Ereg of regenerative energy such that it is equal to or less than the limit value. However, by determining the specifications of the motor 5 in the following manner, it is possible to control the total amount Ereg of regenerative energy such that it is certainly equal to or less than the limit value.

More specifically, the specifications of the motor 5 are determined such that, under conditions where the motor 5 is driven at a predetermined rotating speed and with a predetermined load torque, the actual flux linkage (the d-axis flux linkage / the primary flux linkage) in the motor controlled by the driving control portion 6 in the inverter control device is 2.5 times or less the flux linkage of when the regenerative energy charged in the capacitor 32 in the inverter control device from the motor is zero (the respective factors of the motor which relate to the flux linkage are the d-axis inductance Ld, the q-axis inductance Lq, and the electromotive force coefficient A).

As described above, the regenerative energy from the motor is certainly suppressed to be equal to or less than a predetermined value, thereby certainly attaining optimization of the efficiency of "the converter (the rectification portion 2 + the smoothing portion 3) + the inverter (the DC/AC conversion portion 4)" (realization of a total efficiency with a minimum necessary value (a preliminarily-set target efficiency value)).

(Second Embodiment)

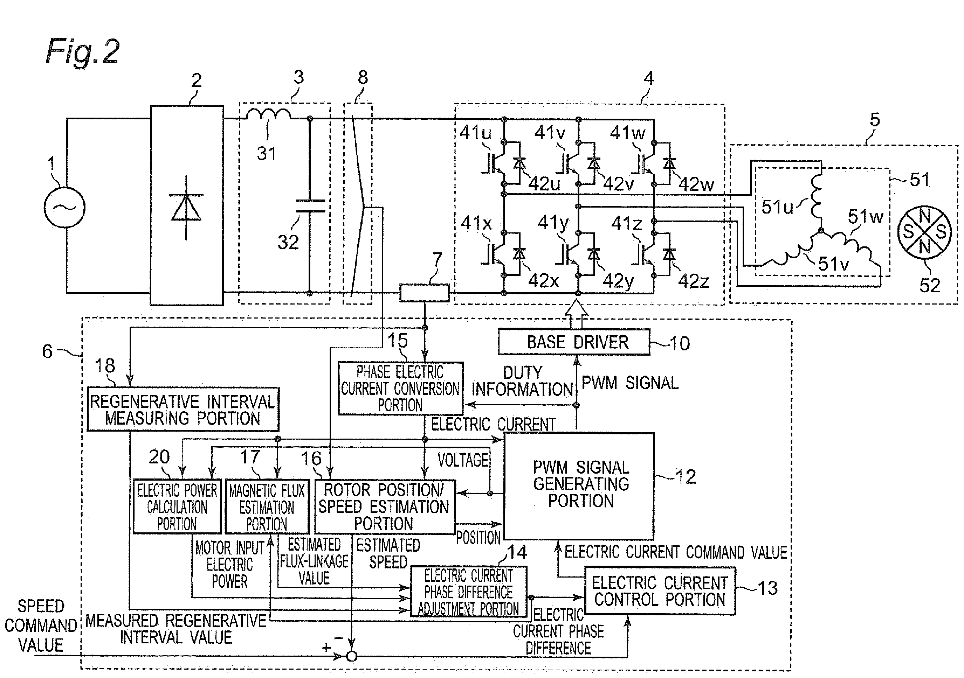

Fig. 2 is a diagram of the system structure of an inverter control device according to a second embodiment of the present application. The same components as those of the inverter control device according to the first embodiment (Fig. 1) will be designated by the same reference characters and also, in cases where they perform the same operations thereas, the descriptions thereof will be omitted for preventing redundant descriptions, and only different matters thereof will be described.

Unlike the inverter control device according to the first embodiment (Fig. 1), the inverter control device according to the second embodiment (Fig. 2) is provided, as a constituent, with a regenerative-interval measuring portion 18 adapted to measure intervals during which a regenerative electric current flows into a capacitor 32 from a motor 5 at intervals of the variation period of a smoothened voltage, based on the detected value of a bus current in a DC-side to/from a DC/AC conversion portion 4 detected by an electric-current detection portion 7. An electric-current phase-difference adjustment portion 14 is adapted to adjust the phase difference between the electric current and the induced voltage generated by the motor 5, such that an estimated flux-linkage value estimated by a magnetic-flux estimation portion 17 is equal to or less than a flux-linkage set value that is preliminarily set, further the measured regenerative-interval value measured by the regenerative-interval measuring portion 18 is equal to or less than a regenerative-interval set value that is preliminarily set and also, the average value of an input electric power to the motor 5 calculated by an electric power calculation portion 20 has a minimum value.

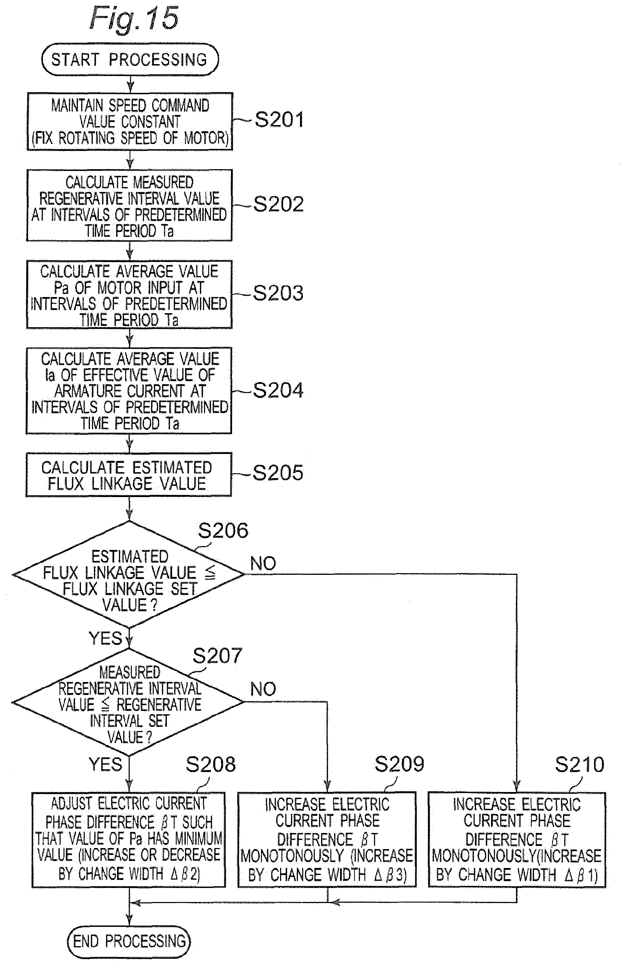

Hereinafter, the magnetic-flux estimation portion 17, the electric power calculation portion 20, the regenerative-interval measuring portion 18 and the electric-current phase-difference adjustment portion 14, which are characteristics of the inverter control device according to the present example will be described, in detail, with reference to Fig. 15.

Fig. 15 illustrates a second processing flow in the inverter control device according to the present example. Similarly to in the inverter control device according to the first embodiment, a capacitor 32 having a significantly-smaller capacitance is employed, which causes the armature current in the motor 5 to largely pulse. Therefore, prior to the estimation of the flux linkage in the motor 5 by the magnetic-flux estimation portion 17, the motor 5 is fixed at a predetermined rotating speed (one of plural rotating speeds in table data as described above, for example), while the speed command value provided from the outside is maintained constant (S201).

Next, the regenerative-interval measuring portion 18 measures intervals during which the detected value of the bus current in the DC-side to/from the DC/AC conversion portion 4 detected by the electric-current detection portion 7 is negative, at intervals of a predetermined time interval Ta that is preliminarily set (S202).

More specifically, the electric-current detection portion 7 detects the bus current at intervals of the carrier period Ts. Therefore, the number of times that the detected value of the bus current has gotten to be less than a predetermined value ($\pm\delta$, which is determined in consideration of influences of noises and the like) is counted, through a counter and the like. It is possible to calculate the measured regenerative-interval value Treg at intervals of the variation period of the smoothened voltage, according to Equation 12, assuming that the number of counts within a predetermined time interval Ta (which is set to be an integer multiple of the variation period of the smoothened voltage and, thus, is M times thereof) is N.

[Math 17]

$$\mathrm{T\ r\ e\ g} = \mathrm{N} \times \mathrm{T\ s} \diagup \mathrm{M} \ \ldots (12)$$

As described above, this detection can be implemented along with the detection of the armature current flowing through the motor 5, which eliminates the necessity of provision of an additional sensor or the like, thereby offering an advantage in terms of the cost.

Next, the electric power calculation portion 20 calculates the average value Pa of the input electric power to the motor 5, from the output voltage calculated by a PWM signal generating portion 12, and from the armature current resulted from the conversion by the phase-electric-current conversion portion 15, at intervals of the predetermined time period Ta, according to Equation 4 (S203).

Next, according to Equation 5, the magnetic-flux estimation portion 17 calculates the average value Ia of the effective value of the armature current resulted from the conversion by the phase-electric-current conversion portion 15, at intervals of the predetermined time period Ta that is preliminarily set, at first (S204).

Further, the flux linkage in the orthogonal two-axis coordinate system is calculated, according to Equations 6 to 10, based on the average value Ia of the effective value of the armature current which has been calculated, and based on the respective preliminarily-set factors (the d-axis inductance Ld, the q-axis inductance Lq, and the electromotive force coefficient A) of the motor 5 (S205).

Next, the electric-current phase-difference adjustment portion 14 determines whether or not the estimated flux-linkage value (the d-axis flux-linkage average value $\lambda$da / the primary flux-linkage average value $\lambda$1a) estimated by the magnetic-flux estimation portion 17 is equal to or less than a preliminarily-set flux-linkage set value (d-axis flux-linkage set value / primary flux-linkage set value), at first (S206). If the estimated flux-linkage value is larger than the flux-linkage set value in S206, the electric-current phase difference $\beta$T is monotonously increased in steps of a predetermined change width $\Delta\beta$1 for performing field weakening operations, until the estimated flux-linkage value (the d-axis flux-linkage average value $\lambda$da / the primary flux-linkage average value $\lambda$1a) gets to be equal to or less than the flux-linkage set value (d-axis flux-linkage set value / primary flux-linkage set value) (S210). In the aforementioned way, the total amount Ereg of the regenerative energy from the motor 5 can be controlled to be equal to or less than a predetermined limit value.

If the estimated flux-linkage value (d-axis flux-linkage average value $\lambda$da / primary flux-linkage average value $\lambda$1a) is equal to or less than the flux-linkage set value (d-axis flux-linkage set value / primary flux-linkage set value) in S206, the electric-current phase-difference adjustment portion 14 operates to determine whether or not the measured regenerative-interval value Treg measured by the regenerative-interval measuring portion 18 is equal to or less than a preliminarily-set regenerative-interval set value, at first (S207). If the measured regenerative-interval value Treg is larger than the regenerative-interval set value in S207, the electric-current phase difference $\beta$T is monotonously increased in steps of a predetermined change width $\Delta\beta$3 (which is a change width smaller than $\Delta\beta$1 but larger than $\Delta\beta$2) for performing field weakening operations until the measured regenerative-interval value Treg gets to be equal to or less than the regenerative-interval set value, in order to optimize the regenerative intervals (S209).

If the measured regenerative-interval value Treg is equal to or less than the regenerative-interval set value in S207, the electric-current phase-difference adjustment portion 14 operates to change the electric-current phase difference $\beta$T by the predetermined change width $\Delta\beta$2 (which is a change width smaller than $\Delta\beta$1 and $\Delta\beta$3) and to adjust the electric-current phase difference $\beta$T such that the value of Pa is a minimum value, based on the difference in the average value Pa (which has been calculated according to Equation 4) of the motor input electric power between before and after the change of the electric-current phase difference $\beta$T (S208).

As described above, the inverter control device according to the second embodiment is an inverter control device for driving a motor 5 adapted to utilize a magnet torque generated with a field magnetic flux and an armature current, and a reluctance torque generated by the armature current and an inductance change in an armature winding, in combination with each other, so as to make the ratio of the reluctance torque higher. The inverter control device includes the rectification portion 2 to which the AC power supply 1 is inputted, the smoothing portion 3 having the capacitor with a value set so that the output voltage from the rectification portion 2 pulses at a frequency about twice an AC-power-supply frequency, the DC/AC conversion portion 4 adapted to convert the smoothened voltage from the smoothing portion 3 into a desired AC voltage for driving the motor 5, the driving control portion 6 adapted to transmit, to the DC/AC conversion portion 4, information for driving the motor corresponding to the smoothened voltage, and the electric-current detection portion 7 adapted to detect the armature current in the motor 5. The driving control portion 6 includes the magnetic-flux estimation portion 17 which is adapted to estimate the flux linkage value in the motor 5 based on the armature current detected by the electric-current detection portion 7, the electric-current phase-difference adjustment portion 14 adapted to adjust the phase difference between the armature current and the induced voltage generated by the motor 5, the regenerative-interval measuring portion 18 adapted to measure a measured regenerative-interval value indicative of an interval during which a regenerative electric current flows into the capacitor from the motor 5, and the electric power calculation portion 20 adapted to calculate input electric power to the motor 5 from the voltage outputted from the DC/AC conversion portion 4, and from the armature current detected by the electric-current detection portion 7. The electric-current phase-difference adjustment portion 14 is adapted to perform a phase setting, such that the estimated flux-linkage value estimated by the magnetic-flux estimation portion 17 is equal to or less than a flux-linkage set value that is preliminarily set, the measured regenerative-interval value measured by the regenerative-interval measuring portion is equal to or less than a regenerative-interval set value that is preliminarily set and also, the average value of input electric power to the motor 5 calculated by the electric power calculation portion 20 has a minimum value. As described above, the regenerative energy from the motor 5 and the intervals during which the regenerative electric current flows therefrom are controlled to be equal to or less than respective predetermined values, thereby certainly suppressing the intervals during which the input electric current from the AC power supply 1 is not conducted thereto to be equal to or less than a predetermined value, while optimizing the efficiency of "the converter (the rectification portion 2 + the smoothing portion 3) + the inverter (the DC/AC conversion portion 4)" (realizing a total efficiency with a minimum necessary value (a preliminarily-set target efficiency value)). Further, the input electric power to the motor 5 is suppressed to a minimum value, thereby alleviating the reduction of the motor efficiency. This can optimize the efficiency of the entire system.

(Third Embodiment)

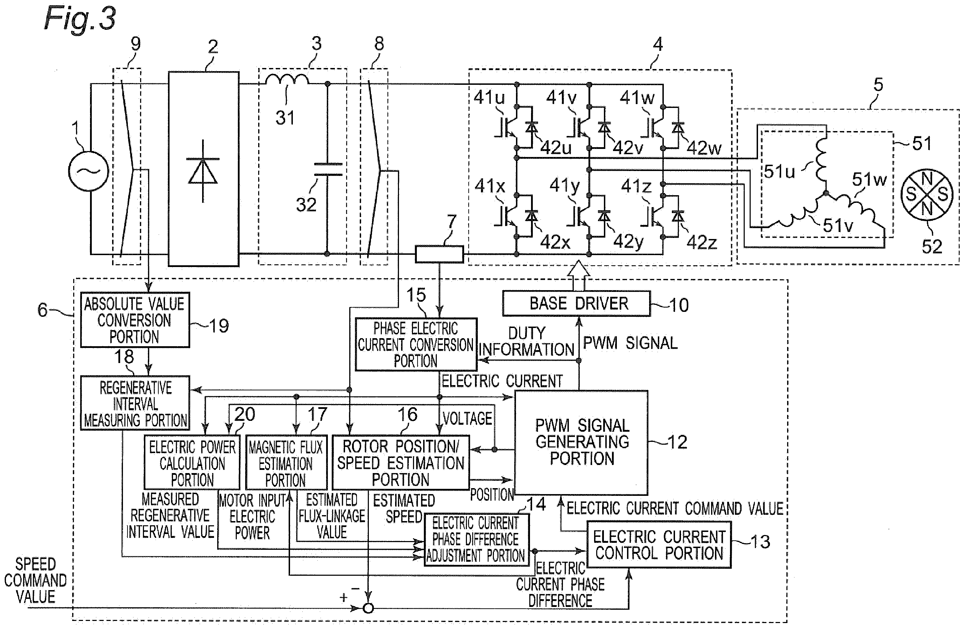

Fig. 3 is a diagram of the system structure of an inverter control device according to a third embodiment of the present application. The same components as those of the inverter control device according to the first embodiment (Fig. 1) and the inverter control device according to the second embodiment (Fig. 2) will be designated by the same reference characters and also, in cases where they perform the same operations thereas, the descriptions thereof will be omitted for preventing redundant descriptions, and only different matters thereof will be described.

Unlike the inverter control device according to the second embodiment (Fig. 2), the inverter control device according to the third embodiment (Fig. 3) is provided, as constituents, with an AC-voltage detection portion 9 adapted to detect the voltage of an AC power supply 1, and an absolute-value conversion portion 19 adapted to determine the absolute value of the detected AC-voltage value Vac having been detected by the AC-voltage detection portion 9. A regenerative-interval measuring portion 18 is adapted to measure intervals during which a regenerative electric current flows into a capacitor 32 from a motor 5, based on the magnitude relationship between the absolute value |Vac| of the detected AC-voltage value obtained by the absolute-value conversion portion 19 and the detected smoothened-voltage value Vdc detected by a smoothened-voltage detection portion 8 (it is preferable that the detected AC-voltage value Vac and the detected smoothened-voltage value Vdc are detected at the same frequency and also, they are detected at timings which are relatively close to each other).

More specifically, assuming that the period of the detection of the detected AC-current value Vac and the detected smoothened-voltage value Vdc is Tsmp, the regenerative-interval measuring portion 18 counts, with a counter or the like, the number of times that "Vdc > |Vac| $\pm$ $\delta2$ ($\delta2$ is set in consideration of influences of noises and the like)" has been satisfied, and the number of counts within a predetermined time interval Ta (which is set to be an integer multiple of the variation period of the smoothened voltage and, thus, is M2 times thereof) is N2, it is possible to calculate the measured regenerative-interval value Treg2 at intervals of the variation period of the smoothened voltage, according to Equation 13.

[Math 18]

$$\mathrm{T\,r\,e\,g\,2} = \mathrm{N2} \times \mathrm{T\,s\,m\,p} \diagup \mathrm{M2} \quad \ldots (13)$$

The operations of the other constituents are the same as those of the inverter control device according to the second embodiment and, therefore, are not described herein.

14

As described above, the intervals during which the regenerative electric current flows into the capacitor 32 from the motor 5 are measured, based on the magnitude relationship between the absolute value |Vac | of the detected AC voltage value and the detected smoothened-voltage value Vdc. This enables certainly measuring the intervals during which the regenerative electric current flows into the capacitor 32 from the motor 5, even in the event of voltage distortions in the AC power supply 1 and/or fluctuations of the power supply frequency.

Further, the inverter control devices according to the first to third embodiments have been described as being structured to include the electric-current control portion 13 adapted to derive an electric-current command value such that the rotating speed of the motor 5 agrees with a speed command value, based on an electric-current phase difference supplied thereto from an electric-current phase-difference adjustment portion 14, and based on information about the deviation of the rotating speed of the motor 5 estimated by a rotor position/speed estimation portion 16 from the speed command value supplied from the outside. However, the inverter control devices can be also structured to include a torque control portion for deriving a torque command value Tq* instead of an electric-current command value (for example, the torque command value Tq* can be derived by multiplying the electric-current command value I* by a gain K, as "Tq* = K × I*").

The inverter control devices according to the first to third embodiments have been described as being structured to include the rotor position/speed estimation portion 16 for estimating the rotating speed of the motor 5 and the rotor magnet-pole positions in the motor 5. However, it goes without saying that it is also possible to employ a position sensor for detecting the magnetic-pole positions in the rotor, such as an encoder or a resolver.

Further, the electric-current detection portion in the inverter control devices according to the first and third embodiments has been described as being structured to directly detect the bus current in the DC-side to/from the DC/AC conversion portion 4 and to indirectly detect the armature current flowing through the motor 5 from the detected value of the bus current. However, it goes without saying that it is also possible to employ an electric-current sensor, such as a DC-CT (in this case, it is possible to directly detect the armature current, which eliminates the necessity of provision of the phase-electric-current conversion portion 15).

Further, the inverter control devices according to the first to third embodiments can be adapted such that the electric-current phase-difference adjustment portion 14 performs the phase adjustment, only when the detected smoothened-voltage value detected by the smoothened-voltage detection portion 8 is smaller than an arbitrary set value, which can shorten the time required for processing with the microcomputer, the system LSI and the like (the arbitrary set value can be set in consideration of the AC voltage value of the AC power supply 1, the capacities of the reactor 31 and the capacitor 32 in the smoothing portion 3, and the like, within the range of the maximum value of the charging voltage across the capacitor 32 generated by the regenerative energy from the motor 5 to the maximum value of the smoothened voltage).

Further, the inverter control device according to the third embodiment can be adapted such that the electric-current phase-difference adjustment portion 14 performs the phase adjustment, only when the absolute value of the detected AC-voltage value detected by the absolute-value conversion portion 19 is smaller than an arbitrary set value. This can shorten the time required for processing with the microcomputer, the system LSI and the like (the arbitrary set value can be set in consideration of the AC voltage value of the AC power supply 1, the capacities of the reactor 31 and the capacitor 32 in the smoothing portion 3, and the like, within the range of the maximum value of the charging voltage across the capacitor 32 generated by the regenerative energy from the motor 5 to the maximum value of the absolute value of the detected AC-voltage value). Further, in addition thereto, in combination therewith, the electric-current phase-difference adjustment portion 14 can be adapted to perform the phase adjustment, only when the aforementioned detected smoothened-voltage value detected by the smoothened-voltage detection portion 8 is smaller than an arbitrary set value. In this case, the electric-current phase-difference adjustment portion 14 is caused to perform the phase adjustment, only when at least a single value, out of the detected smoothened-voltage value and the absolute value of the detected AC-voltage value, is smaller than the arbitrary set value.

Further, in the inverter control devices according to the first and second embodiments, it is also possible to further provide the AC-voltage detection portion 9 and the absolute-value conversion portion 19, and the electric-current phase-difference adjustment portion 14 can be adapted to perform the phase adjustment, only when the absolute value of the detected AC-voltage value resulted from the conversion by the absolute-value conversion portion 19 is smaller than an arbitrary set value.

**Industrial Applicability**

As described above, the inverter control device according to the present invention is an inverter control device structured to include a capacitor with a smaller capacitance. The inverter control device is adapted to utilize a motor made to have a higher ratio of a reluctance torque and furthermore, is adapted to control the regenerative energy from the motor, which can optimize the efficiency of the motor driving system. Therefore, the inverter control device according to the present invention is applicable to applications which involve driving motors, such as air conditioning apparatuses such as air conditioners, freezing refrigerators, vacuum cleaners and the like.

**Reference Signs List**

| | |
|---|---|
| 1: | AC power supply |
| 2: | Rectification portion |
| 3: | Smoothing portion |
| 31: | Reactor |
| 32: | Capacitor |
| 4: | DC/AC conversion portion |
| 41u to 41z: | Switching device |
| 42u to 42z: | Freewheeling diode |
| 5: | Motor |
| 51: | Stator |
| 51u to 51w: | Armature winding |
| 52: | Rotor |
| 6: | Driving control portion |
| 7: | Electric-current detection portion |
| 8: | Smoothened-voltage detection portion |
| 9: | AC-voltage detection portion |
| 10: | Base driver |
| 12: | PWM signal generating portion |
| 13: | Electric-current control portion |
| 14: | Electric-current phase-difference adjustment portion |
| 15: | Phase-electric-current conversion portion |
| 16: | Rotor position/speed estimation portion |
| 17: | Magnetic-flux estimation portion |
| 18: | Regenerative-interval measuring portion |
| 19: | Absolute-value conversion portion |
| 20: | Electric power calculation portion |

**Claims**

1.  An inverter control device for driving a motor (5) adapted to utilize a magnet torque generated with a field magnetic flux and an armature current, and a reluctance torque generated with the armature current and an inductance change in an armature winding (51u - 51w), in combination with each other, the inverter control device comprising:

    a rectification portion (2) to which an AC power supply (1) is inputted;
    a smoothing portion (3) including a capacitor (32) having a value adapted to provide an output voltage from the rectification portion (2) pulsing at a frequency about twice an AC-power-supply frequency;
    a DC/AC conversion portion (4) adapted to convert a smoothened voltage from the smoothing portion (3) into a desired AC voltage for driving the motor (5);
    a driving control portion (6) adapted to transmit, to the DC/AC conversion portion (4), information for driving the motor (5) corresponding to the smoothened voltage; and
    an electric-current detection portion (7) adapted to detect the armature current in the motor (5);
    wherein the driving control portion (6) includes a magnetic-flux estimation portion (17) adapted to estimate a flux linkage value in the motor (5) based on the armature current detected by the electric-current detection portion (7), an electric-current phase-difference adjustment portion (14) adapted to adjust a phase difference between the armature current and an induced voltage generated by the motor (5), and an electric power calculation portion (20) adapted to calculate input electric power to the motor (5), from the voltage outputted from the DC/AC conversion portion (4), and from the armature current detected by the electric-current detection portion (7), and
    **characterised in that**
    the electric-current phase-difference adjustment portion (14) is adapted to perform a phase setting, such that an estimated flux-linkage value estimated by the magnetic-flux estimation portion (17) is equal to or less than a preset flux-linkage value, and an average value of the input electric power to the motor (5) during operation calculated by the electric power calculation portion (20) is equal to a minimum value;

wherein the preset flux-linkage value corresponds to a limit value of a total amount Ereg of regenerative energy from the motor (5) charged in the capacitor (32).

2. The inverter control device according to claim 1, wherein
the magnetic-flux estimation portion (17) is adapted to estimate a flux linkage in an orthogonal two-axis coordinate system through a calculation based on respective preliminarily-set factors of the motor (5), and the armature current detected by the electric-current detection portion (7).

3. The inverter control device according to claim 1 or 2, wherein
the driving control portion (6) further includes a regenerative-interval measuring portion (18) adapted to measure a measured regenerative-interval value indicative of an interval during which a regenerative electric current flows into the capacitor (32) from the motor (5), and
the electric-current phase-difference adjustment portion (14) is adapted to perform a phase setting, such that the measured regenerative-interval value measured by the regenerative-interval measuring portion (18) is equal to or less than a regenerative-interval set value that is preliminarily set.

4. The inverter control device according to claim 3, wherein
the electric-current detection portion (7) is adapted to directly detect a bus current in a DC-side to/from the DC/AC conversion portion (4) and to indirectly detect the armature current flowing through the motor (5), from a detected value of the bus current, and
the regenerative-interval measuring portion (18) is adapted to measure the interval during which the regenerative electric current flows into the capacitor (32) from the motor (5), based on the detected value of the bus current.

5. The inverter control device according to any one of claims 1 to 4, further comprising:

a smoothened-voltage detection portion (8) adapted to detect the smoothened voltage,
wherein the electric-current phase-difference adjustment portion (14) is adapted to perform a phase adjustment, only when a detected smoothened-voltage value detected by the smoothened-voltage detection portion (8) is less than an arbitrary set value.

6. The inverter control device according to any one of claims 1 to 4, further comprising:

an AC-voltage detection portion (9) adapted to detect a voltage from the AC power supply (1); and
an absolute-value conversion portion (19) adapted to determine an absolute value of a detected AC voltage value detected by the AC-voltage detection portion (9),
wherein the electric-current phase-difference adjustment portion (14) is adapted to perform a phase adjustment, only when the absolute value of the detected AC-voltage value resulted from the conversion by the absolute-value conversion portion (19) is less than an arbitrary set value.

7. The inverter control device according to claim 2 or 3, further comprising:

an AC-voltage detection portion (9) adapted to detect a voltage from the AC power supply (1);
an absolute-value conversion portion (19) adapted to determine an absolute value of a detected AC voltage value detected by the AC-voltage detection portion (9); and
a smoothened-voltage detection portion (8) adapted to detect the smoothened voltage,
wherein the regenerative-interval measuring portion (18) is adapted to measure the interval during which the regenerative electric current flows into the capacitor (32) from the motor (5), based on a magnitude relationship between the absolute value of the detected AC-voltage value resulted from the conversion by the absolute-value conversion portion (19) and a detected smoothened-voltage value detected by the smoothened-voltage detection portion (8).

8. The inverter control device according to claim 7,
wherein the electric-current phase-difference adjustment portion (14) is adapted to perform a phase adjustment, only when at least one of the detected smoothened-voltage value detected by the smoothened-voltage detection portion (8) and the absolute value of the detected AC-voltage value resulted from the conversion by the absolute-value conversion portion (19) is less than an arbitrary set value.

**9.** The inverter control device according to any one of claims 1 to 8, wherein
the smoothing portion (3) comprises a capacitor (32) and a reactor (31), and a resonance frequency determined by the capacitor (32) and the reactor (31) is set to be 40 times or more the AC-power-supply frequency.

**10.** The inverter control device according to any one of claims 1 to 9, wherein
the flux-linkage set value is set to be 2.5 times or less the flux linkage of when a regenerative energy charged in the capacitor (32) from the motor (5) is zero.

**11.** A motor (5) connected to the inverter control device according to any one of claims 1 to 10, wherein
the motor (5) has a such specification that a flux linkage controlled by a driving control portion (6) in the inverter control device is 2.5 times or less a flux linkage of when a regenerative energy charged in a capacitor (32) in the inverter control device is zero, under a condition where the motor (5) is driven at a predetermined rotating speed and with a predetermined load torque.

**Patentansprüche**

**1.** Wechselrichter-Steuervorrichtung zum Antreiben eines Motors (5), der dafür konfiguriert ist, ein mit einem Feldmagnetfluss und einem Ankerstrom erzeugtes Magnet-Drehmoment und ein mit dem Ankerstrom und einer Induktivitätsänderung in einer Ankerwicklung (51u - 51w) erzeugtes Reluktanz-Drehmoment in Kombination miteinander zu nutzen, wobei die Wechselrichter-Steuervorrichtung umfasst:

einen Gleichrichtungsabschnitt (2), der von einer Wechselstromversorgung (1) gespeist wird;
einen Glättungsabschnitt (3) mit einem Kondensator (32), der einen Wert aufweist, der dafür konfiguriert ist, eine Ausgangsspannung aus dem Gleichrichtungsabschnitt (2) bereitzustellen, die mit einer Frequenz von etwa dem Doppelten einer Frequenz der Wechselstromversorgung pulsiert;
einen Gleichstrom/Wechselstrom-Umwandlungsabschnitt (4), der dafür konfiguriert ist, eine geglättete Spannung von dem Glättungsabschnitt (3) in eine gewünschte Wechselspannung zum Antreiben des Motors (5) umzuwandeln;
einen Antriebssteuerabschnitt (6), der dafür konfiguriert ist, Informationen zum Antreiben des Motors (5) entsprechend der geglätteten Spannung an den Gleichstrom/Wechselstrom-Umwandlungsabschnitt (4) zu übertragen; und
einen Stromerfassungsabschnitt (7), der dafür konfiguriert ist, den Ankerstrom im Motor (5) zu erfassen;
wobei der Antriebssteuerabschnitt (6) einen Magnetfluss-Schätzungsabschnitt (17), der dafür konfiguriert ist, einen Flussverkettungswert in dem Motor (5) auf der Grundlage des durch den Stromerfassungsabschnitt (7) erfassten Ankerstroms abzuschätzen, einen Strom-Phasendifferenz-Einstellabschnitt (14), der dafür konfiguriert ist, eine Phasendifferenz zwischen dem Ankerstrom und einer durch den Motor (5) erzeugten induzierten Spannung einzustellen, und einen Elektrische-Leistung-Berechnungsabschnitt (20) umfasst, der dafür konfiguriert ist, eine elektrische Eingangsleistung des Motors (5) aus der von dem Gleichstrom/Wechselstrom-Umwandlungsabschnitt (4) ausgegebenen Spannung und dem von dem Stromerfassungsabschnitt (7) erfassten Ankerstrom zu berechnen, und
**dadurch gekennzeichnet, dass**
der Strom-Phasendifferenz-Einstellabschnitt (14) dafür konfiguriert ist, eine Phaseneinstellung so durchzuführen, dass ein geschätzter Flussverkettungswert, der durch den Magnetfluss-Schätzungsabschnitt (17) geschätzt wird, gleich oder kleiner als ein voreingestellter Flussverkettungswert ist, und ein Mittelwert der elektrischen Eingangsleistung in den Motor (5) während des Betriebs, der durch den Elektrische-Leistung-Berechnungsabschnitt (20) berechnet wird, gleich einem Minimalwert ist;
wobei der voreingestellte Flussverkettungswert einem Grenzwert einer Gesamtmenge Ereg an regenerativer Energie von dem Motor (5) entspricht, die in den Kondensator (32) geladenen wird.

**2.** Wechselrichter-Steuervorrichtung nach Anspruch 1, wobei
der Magnetfluss-Schätzungsabschnitt (17) dafür konfiguriert ist, eine Flussverkettung in einem orthogonalen Zwei-Achsen-Koordinatensystem durch eine Berechnung abzuschätzen, die auf jeweiligen vorläufig festgelegten Faktoren des Motors (5) und dem durch den Stromerfassungsabschnitt (7) erfassten Ankerstrom basiert.

**3.** Wechselrichter-Steuervorrichtung nach Anspruch 1 oder 2, wobei
der Antriebssteuerabschnitt (6) ferner einen Regenerativ-Intervall-Messabschnitt (18) aufweist, der dafür konfiguriert ist, einen gemessenen Regenerativ-Intervallwert zu messen, der ein Intervall anzeigt, während dessen ein regenerativer elektrischer Strom von dem Motor (5) in den Kondensator (32) fließt, und
der Strom-Phasendifferenz-Einstellabschnitt (14) dafür konfiguriert ist, eine Phaseneinstellung so durchzuführen, dass der gemessene Regenerativ-Intervallwert, der von dem Regenerativ-Intervall-Messabschnitt (18) gemessen wird, gleich oder kleiner als ein Regenerativ-Intervall-Einstellwert ist, der vorläufig eingestellt ist.

4. Wechselrichter-Steuervorrichtung nach Anspruch 3, wobei
der Stromerfassungsabschnitt (7) dafür konfiguriert ist, einen Bus-Strom auf einer Gleichstromseite zu/von dem Gleichstrom/Wechselstrom-Umwandlungsabschnitt (4) direkt zu erfassen und den durch den Motor (5) fließenden Ankerstrom anhand eines erfassten Werts des Bus-Stroms indirekt zu erfassen, und
der Regenerativ-Intervall-Messabschnitt (18) dafür konfiguriert ist, basierend auf dem erfassten Wert des Busstroms das Intervall zu messen, währenddessen der regenerative elektrische Strom von dem Motor (5) in den Kondensator (32) fließt.

5. Wechselrichter-Steuervorrichtung nach einem der Ansprüche 1 bis 4, ferner umfassend:

einen Glättungsspannungs-Erfassungsabschnitt (8), der dafür konfiguriert ist, die geglättete Spannung zu erfassen,
wobei der Strom-Phasendifferenz-Einstellabschnitt (14) dafür konfiguriert ist, eine Phaseneinstellung nur dann durchzuführen, wenn ein erfasster Glättungsspannungswert, der durch den Glättungsspannungs-Erfassungsabschnitt (8) erfasst wird, kleiner als ein willkürlicher Einstellwert ist.

6. Wechselrichter-Steuervorrichtung nach einem der Ansprüche 1 bis 4, ferner umfassend:

einen Wechselspannungs-Erfassungsabschnitt (9), der dafür konfiguriert ist, eine Spannung von der Wechselspannungsversorgung (1) zu erfassen; und
einen Absolutwert-Umwandlungsabschnitt (19), der dafür konfiguriert ist, einen Absolutwert eines erfassten Wechselspannungswertes zu bestimmen, der von dem Wechselspannungs-Erfassungsabschnitt (9) erfasst wird,
wobei der Strom-Phasendifferenz-Einstellabschnitt (14) dafür konfiguriert ist, eine Phaseneinstellung nur dann durchzuführen, wenn der Absolutwert des erfassten Wechselspannungswertes, der sich aus der Umwandlung durch den Absolutwert-Umwandlungsabschnitt (19) ergibt, kleiner als ein willkürlicher Einstellwert ist.

7. Wechselrichter-Steuervorrichtung nach Anspruch 2 oder 3, ferner umfassend:

einen Wechselspannungs-Erfassungsabschnitt (9), der dafür konfiguriert ist, eine Spannung von der Wechselspannungsversorgung (1) zu erfassen;
einen Absolutwert-Umwandlungsabschnitt (19), der dafür konfiguriert ist, einen Absolutwert eines erfassten Wechselspannungswertes zu bestimmen, der von dem Wechselspannungs-Erfassungsabschnitt (9) erfasst wird; und
einen Glättungsspannungs-Erfassungsabschnitt (8), der dafür konfiguriert ist, die geglättete Spannung zu erfassen,
wobei der Regenerativ-Intervall-Messabschnitt (18) dafür konfiguriert ist, das Intervall zu messen, währenddessen der regenerative elektrische Strom von dem Motor (5) in den Kondensator (32) fließt, basierend auf einer Größenbeziehung zwischen dem Absolutwert des erfassten Wechselspannungswertes, der sich aus der Umwandlung durch den Absolutwert-Umwandlungsabschnitt (19) ergibt, und einem erfassten Glättungsspannungswert, der durch den Glättungsspannungs-Erfassungsabschnitt (8) erfasst wird.

8. Wechselrichter-Steuervorrichtung nach Anspruch 7,
wobei der Strom-Phasendifferenz-Einstellabschnitt (14) dafür konfiguriert ist, eine Phaseneinstellung nur dann durchzuführen, wenn der erfasste Glättungsspannungswert, der durch den Glättungsspannungs-Erfassungsabschnitt (8) erfasst wird, und/oder der Absolutwert des erfassten Wechselspannungswertes, der sich aus der Umwandlung durch den Absolutwert-Umwandlungsabschnitt (19) ergibt, kleiner als ein willkürlicher Einstellwert ist.

9. Wechselrichter-Steuervorrichtung nach einem der Ansprüche 1 bis 8,
wobei der Glättungsabschnitt (3) einen Kondensator (32) und eine Drossel (31) umfasst, und wobei eine Resonanzfrequenz, die durch den Kondensator (32) und die Drossel (31) bestimmt wird, so eingestellt ist, dass sie das 40-fache oder mehr der Wechselstromversorgungsfrequenz beträgt.

**10.** Wechselrichter-Steuervorrichtung nach einem der Ansprüche 1 bis 9,
wobei der Flussverkettungs-Einstellwert so eingestellt ist, dass er das 2,5-fache oder weniger einer solchen Flussverkettung beträgt, bei der eine von dem Motor (5) in den Kondensator (32) geladene regenerative Energie gleich null ist.

**11.** Motor (5), der mit der Wechselrichter-Steuervorrichtung nach einem der Ansprüche 1 bis 10 verbunden ist, wobei der Motor (5) eine solche Spezifikation aufweist, dass eine Flussverkettung, die durch einen Antriebssteuerabschnitt (6) in der Wechselrichter-Steuervorrichtung gesteuert wird, das 2,5-fache oder weniger einer solchen Flussverkettung beträgt, bei der eine in einen Kondensator (32) in der Wechselrichter-Steuervorrichtung geladene regenerative Energie gleich null ist, unter einer Bedingung, bei der der Motor (5) mit einer vorbestimmten Drehzahl und mit einem vorbestimmten Lastdrehmoment angetrieben wird.

## Revendications

**1.** Dispositif de commande d'onduleur pour entraîner un moteur (5) conçu pour utiliser un couple magnétique généré par un flux magnétique de champ et un courant d'induit et un couple de réluctance généré par le courant d'induit et un changement d'inductance dans un enroulement d'induit (51u - 51w), en combinaison l'un avec l'autre, le dispositif de commande d'onduleur comprenant :

une partie de redressement (2) alimentée en courant alternatif (1) ;
une partie de lissage (3) comprenant un condensateur (32) présentant une valeur conçue pour fournir une tension de sortie à partir de la partie de redressement (2) pulsant à une fréquence valant environ deux fois la fréquence de l'alimentation en courant alternatif;
une partie de conversion CC/CA (4) conçue pour convertir une tension lissée provenant de la partie de lissage (3) en une tension alternative souhaitée pour entraîner le moteur (5);
une partie de commande d'entraînement (6) conçue pour transmettre, à la partie de conversion CC/CA (4), des informations pour entraîner le moteur (5) en fonction de la tension lissée; et
une partie de détection (7) de courant électrique conçue pour détecter le courant d'induit dans le moteur (5);
la partie de commande d'entraînement (6) comprenant une partie d'estimation (17) de flux magnétique conçue pour estimer une valeur de couplage par flux dans le moteur (5) sur la base du courant d'induit détecté par la partie de détection (7) de courant électrique, une partie de réglage de différence de phase (14) de courant électrique conçue pour régler une différence de phase entre le courant d'induit et une tension induite générée par le moteur (5) et une partie de calcul de puissance électrique (20) conçue pour calculer une puissance électrique d'entrée au moteur (5), à partir de la tension délivrée par la partie de conversion CC/CA (4) et à partir du courant d'induit détecté par la partie de détection (7) de courant électrique et
**caractérisé en ce que**
la partie de réglage de différence de phase (14) de courant électrique est conçue pour effectuer un réglage de phase, de telle sorte qu'une valeur de couplage par flux estimée par la partie d'estimation (17) de flux magnétique est égale ou inférieure à une valeur de couplage par flux prédéfinie et une valeur moyenne de la puissance électrique d'entrée au moteur (5) pendant le fonctionnement calculée par la partie de calcul de puissance électrique (20) est égale à une valeur minimale ;
la valeur de couplage par flux prédéfinie correspondant à une valeur limite d'une quantité totale Ereg d'énergie de régénération provenant du moteur (5) chargée dans le condensateur (32).

**2.** Dispositif de commande d'onduleur selon la revendication 1,
la partie d'estimation (17) de flux magnétique étant conçue pour estimer un couplage par flux dans un système de coordonnées à deux axes orthogonaux par l'intermédiaire d'un calcul sur la base de facteurs prédéfinis respectifs du moteur (5) et du courant d'induit détecté par la partie de détection (7) de courant électrique.

**3.** Dispositif de commande d'onduleur selon la revendication 1 ou 2,
la partie de commande d'entraînement (6) comprenant en outre une partie de mesure d'intervalle de régénération (18) conçue pour mesurer une valeur d'intervalle de régénération mesurée indiquant un intervalle pendant lequel un courant électrique régénératif circule dans le condensateur (32) depuis le moteur (5) et
la partie de réglage de différence de phase (14) de courant électrique étant conçue pour effectuer un réglage de phase, de telle sorte que la valeur d'intervalle de régénération mesurée par la partie de mesure d'intervalle de régénération (18) est égale ou inférieure à une valeur de consigne d'intervalle de régénération qui est prédéfinie.

**4.** Dispositif de commande d'onduleur selon la revendication 3,
la partie de détection (7) de courant électrique étant conçue pour détecter directement un courant de bus dans un côté CC vers/depuis la partie de conversion CC/CA (4) et pour détecter indirectement le courant d'induit circulant à travers le moteur (5), à partir d'une valeur détectée du courant de bus et
la partie de mesure d'intervalle de régénération (18) étant conçue pour mesurer l'intervalle pendant lequel le courant électrique régénératif circule dans le condensateur (32) depuis le moteur (5), sur la base de la valeur détectée du courant de bus.

**5.** Dispositif de commande d'onduleur selon l'une quelconque des revendications 1 à 4 comprenant en outre:

une partie de détection de tension lissée (8) conçue pour détecter la tension lissée,
la partie de réglage de différence de phase (14) de courant électrique étant conçue pour effectuer un réglage de phase uniquement lorsqu'une valeur détectée de tension lissée détectée par la partie de détection de tension lissée (8) est inférieure à une valeur de consigne arbitraire.

**6.** Dispositif de commande d'onduleur selon l'une quelconque des revendications 1 à 4, comprenant en outre:

une partie de détection de tension alternative (9) conçue pour détecter une tension provenant de l'alimentation en courant alternatif (1); et
une partie de conversion de valeur absolue (19) conçue pour déterminer une valeur absolue d'une valeur détectée de tension alternative détectée par la partie de détection de tension alternative (9),
la partie de réglage de différence de phase (14) de courant électrique étant conçue pour effectuer un réglage de phase, uniquement lorsque la valeur absolue de la valeur détectée de tension alternative résultant de la conversion par la partie de conversion de valeur absolue (19) est inférieure à une valeur de consigne arbitraire.

**7.** Dispositif de commande d'onduleur selon la revendication 2 ou 3, comprenant en outre:

une partie de détection de tension alternative (9) conçue pour détecter une tension à partir de l'alimentation en courant alternatif (1);
une partie de conversion de valeur absolue (19) conçue pour déterminer une valeur absolue d'une valeur détectée de tension alternative détectée par la partie de détection de tension alternative (9); et
une partie de détection de tension lissée (8) conçue pour détecter la tension lissée,
la partie de mesure d'intervalle de régénération (18) étant conçue pour mesurer l'intervalle pendant lequel le courant électrique régénératif circule dans le condensateur (32) depuis le moteur (5), sur la base d'une relation d'amplitude entre la valeur absolue de la valeur détectée de tension alternative résultant de la conversion par la partie de conversion de valeur absolue (19) et une valeur détectée de tension lissée détectée par la partie de détection de tension lissée (8).

**8.** Dispositif de commande d'onduleur selon la revendication 7,
la partie de réglage de différence de phase (14) de courant électrique étant conçue pour effectuer un réglage de phase, uniquement lorsqu'au moins l'une parmi la valeur détectée de tension lissée détectée par la partie de détection de tension lissée (8) et la valeur absolue de la valeur détectée de tension alternative résultant de la conversion par la partie de conversion de valeur absolue (19) est inférieure à une valeur de consigne arbitraire.

**9.** Dispositif de commande d'onduleur selon l'une quelconque des revendications 1 à 8,
la partie de lissage (3) comprenant un condensateur (32) et un réacteur (31) et une fréquence de résonance déterminée par le condensateur (32) et le réacteur (31) étant réglée pour valoir 40 fois ou plus la fréquence d'alimentation en courant alternatif.

**10.** Dispositif de commande d'onduleur selon l'une quelconque des revendications 1 à 9,
la valeur de consigne de couplage par flux étant réglée pour valoir 2,5 fois ou moins le couplage par flux de lorsqu'une énergie de régénération chargée dans le condensateur (32) provenant du moteur (5) est nulle.

**11.** Moteur (5) connecté au dispositif de commande d'onduleur selon l'une quelconque des revendications 1 à 10,
le moteur (5) présentant une spécification telle qu'un couplage par flux commandé par une partie de commande d'entraînement (6) dans le dispositif de commande d'onduleur vaut 2,5 fois ou moins un couplage par flux de lorsqu'une énergie de régénération chargée dans un condensateur (32) dans le dispositif de commande d'onduleur est nulle, dans un état dans lequel le moteur (5) est entraîné à une vitesse de rotation prédéterminée et à un couple

de charge prédéterminé.

Fig.1

Fig.2

Fig.3

EP 2 804 310 B1

ABSOLUTE VALUE CONVERSION PORTION — 19

REGENERATIVE INTERVAL MEASURING PORTION

PHASE ELECTRIC CURRENT CONVERSION PORTION

BASE DRIVER — 10

DUTY INFORMATION    PWM SIGNAL

ELECTRIC CURRENT

ELECTRIC POWER CALCULATION PORTION

MAGNETIC FLUX ESTIMATION PORTION

ROTOR POSITION/ SPEED ESTIMATION PORTION    VOLTAGE

PWM SIGNAL GENERATING PORTION — 12

MEASURED REGENERATIVE INTERVAL VALUE

MOTOR INPUT ELECTRIC POWER

ESTIMATED FLUX-LINKAGE VALUE

ESTIMATED SPEED

POSITION

ELECTRIC CURRENT PHASE DIFFERENCE ADJUSTMENT PORTION

ELECTRIC CURRENT COMMAND VALUE

ELECTRIC CURRENT CONTROL PORTION — 13

ELECTRIC CURRENT PHASE DIFFERENCE

SPEED COMMAND VALUE

*Fig.4*

Fig.5

## Fig.6

(a) TIMING 1

(b) 2  W-PHASE ELECTRIC CURRENT

(c) 3  V-PHASE ELECTRIC CURRENT

Fig.7

## Fig.8

(a) TIMING [1]

41u 41v 41w
42u 42v 42w
41x 41y 41z
42x 42y 42z
51u
51v 51w

(b) [2]

U-PHASE
ELECTRIC
CURRENT

(c) [3]

W-PHASE
ELECTRIC
CURRENT

*Fig.9*

(a) AC VOLTAGE ABSOLUTE VALUE AND SMOOTHENED VOLTAGE

TOTAL AMOUNT Ereg OF REGENERATIVE ENERGY (AREA OF OBLIQUE FACE PORTION)

[SOLID LINE PORTION] SMOOTHENED VOLTAGE

[BROKEN LINE PORTION] AC VOLTAGE ABSOLUTE VALUE

(b) BUS CURRENT

POSITIVE (POWERING)

NEGATIVE (REGENERATIVE)

REGENERATIVE INTERVAL

Fig.10

(a) AC VOLTAGE ABSOLUTE VALUE AND SMOOTHENED VOLTAGE

[SOLID LINE PORTION] SMOOTHENED VOLTAGE

[BROKEN LINE PORTION] AC VOLTAGE ABSOLUTE VALUE

TOTAL AMOUNT EREG OF REGENERATIVE ENERGY (AREA OF OBLIQUE FACE PORTION)

(b) BUS CURRENT

POSITIVE (POWERING)

NEGATIVE (REGENERATIVE)

REGENERATIVE INTERVAL

EP 2 804 310 B1

## Fig.11

# Fig.12

(a) CONVERTER EFFICIENCY
(RECTIFICATION PORTION +
SMOOTHING PORTION)

TOTAL AMOUNT Ereg OF
REGENERATIVE ENERGY

(b) INVERTER EFFICIENCY
(ORTHOGONAL
CONVERSION PORTION)

TOTAL AMOUNT Ereg OF
REGENERATIVE ENERGY

(c) TOTAL EFFICIENCY
(CONVERTER + INVERTER)

TARGET EFFICIENCY VALUE

TOTAL AMOUNT Ereg OF
REGENERATIVE ENERGY

0

LIMIT VALUE OF TOTAL
AMOUNT OF
REGENERATIVE ENERGY

*Fig.13*

MOTOR OUTPUT TORQUE

EP 2 804 310 B1

## Fig.14

```
              ╭─────────────────────╮
              │   START  PROCESSING  │
              ╰─────────────────────╯
                          │
                          ▼            S101
        ┌──────────────────────────────────┐
        │     MAINTAIN SPEED COMMAND         │
        │        VALUE CONSTANT              │
        │ (FIX ROTATING SPEED OF MOTOR)      │
        └──────────────────────────────────┘
                          │
                          ▼            S102
        ┌──────────────────────────────────┐
        │ CALCULATE AVERAGE VALUE Pa OF      │
        │   MOTOR INPUT AT INTERVALS OF      │
        │ PREDETERMINED TIME PERIOD Ta       │
        └──────────────────────────────────┘
                          │
                          ▼            S103
        ┌──────────────────────────────────┐
        │ CALCULATE AVERAGE VALUE Ia OF      │
        │ EFFECTIVE VALUE OF ARMATURE        │
        │      CURRENT AT INTERVALS OF       │
        │ PREDETERMINED TIME PERIOD Ta       │
        └──────────────────────────────────┘
                          │
                          ▼            S104
        ┌──────────────────────────────────┐
        │     CALCULATE ESTIMATED            │
        │      FLUX LINKAGE VALUE            │
        └──────────────────────────────────┘
                          │
                          ▼            S105
                     ◇ ESTIMATED ◇
                 FLUX LINKAGE VALUE ≦           NO
                  FLUX LINKAGE SET     ──────────────────┐
                        VALUE ?                          │
              YES │            S106                       │  S107
```

ADJUST ELECTRIC CURRENT PHASE DIFFERENCE $\beta T$ SUCH THAT VALUE OF Pa HAS MINIMUM VALUE (INCREASE OR DECREASE BY CHANGE WIDTH $\Delta \beta 2$)

INCREASE ELECTRIC CURRENT PHASE DIFFERENCE $\beta T$ MONOTONOUSLY (INCREASE BY CHANGE WIDTH $\Delta \beta 1$)

END PROCESSING

## Fig.15

```
( START PROCESSING )
           │
           ▼
┌─────────────────────────┐
│  MAINTAIN SPEED COMMAND  │
│      VALUE CONSTANT      │ ～S201
│(FIX ROTATING SPEED OF MOTOR)│
└─────────────────────────┘
           │
           ▼
┌─────────────────────────┐
│   CALCULATE MEASURED     │
│ REGENERATIVE INTERVAL VALUE│ ～S202
│AT INTERVALS OF PREDETERMINED│
│     TIME PERIOD Ta       │
└─────────────────────────┘
           │
           ▼
┌─────────────────────────┐
│   CALCULATE AVERAGE VALUE │
│    Pa OF MOTOR INPUT AT   │ ～S203
│INTERVALS OF PREDETERMINED │
│     TIME PERIOD Ta       │
└─────────────────────────┘
           │
           ▼
┌─────────────────────────┐
│   CALCULATE AVERAGE VALUE │
│  la OF EFFECTIVE VALUE OF │
│    ARMATURE CURRENT AT    │ ～S204
│INTERVALS OF PREDETERMINED │
│     TIME PERIOD Ta       │
└─────────────────────────┘
           │
           ▼
┌─────────────────────────┐
│   CALCULATE ESTIMATED     │ ～S205
│    FLUX LINKAGE VALUE     │
└─────────────────────────┘
           │
           ▼
         S206
      ◇ ESTIMATED ◇
     ◇ FLUX LINKAGE VALUE ≦ ◇──NO──────────────────────┐
      ◇ FLUX LINKAGE SET ◇                              │
         ◇ VALUE ? ◇                                    │
           │YES                                         │
           ▼                                            │
         S207                                           │
      ◇ MEASURED ◇                                      │
   ◇ REGENERATIVE INTERVAL ◇──NO─────────────┐          │
    ◇ VALUE ≦ REGENERATIVE ◇                 │          │
      ◇ INTERVAL SET ◇                       │          │
         ◇ VALUE ? ◇                         │          │
       │YES    S208             S209          │   S210   │
       ▼                         ▼            │    ▼     │
┌──────────────────┐  ┌──────────────────┐  ┌──────────────────┐
│ADJUST ELECTRIC CURRENT│ │ INCREASE ELECTRIC │  │ INCREASE ELECTRIC │
│PHASE DIFFERENCE βT SUCH│ │  CURRENT PHASE   │  │  CURRENT PHASE   │
│THAT VALUE OF Pa HAS MINIMUM│ │ DIFFERENCE βT │  │ DIFFERENCE βT │
│VALUE (INCREASE OR DECREASE│ │MONOTONOUSLY (INCREASE│ │MONOTONOUSLY(INCREASE│
│ BY CHANGE WIDTH Δβ2) │ │BY CHANGE WIDTH Δβ3)│ │BY CHANGE WIDTH Δβ1)│
└──────────────────┘  └──────────────────┘  └──────────────────┘
       │                       │                    │
       ◄───────────────────────┘◄───────────────────┘
       ▼
( END PROCESSING )
```

Fig.16

AVERAGE VALUE Pa OF
MOTOR INPUT ELECTRIC POWER

ELECTRIC-CURRENT
PHASE DIFFERENCE $\beta$T

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H10150795 A
- JP 4693904 B

- US 20110031910 A

### Non-patent literature cited in the description

- **TATSUYA NISHIHARA ; SHIGEO MORIMOTO ; MASAYUKI SANADA.** Influences of Electrolytic-Capacitor-less-ness in IPMSM Speed Control System. The Institute of Electrical Engineers, 2009, vol. 4-067, 116-117
- Adaptive loss minimization control of inverter-fed IPM motor drives. **S. VAEZ et al.** POWER ELECTRONICS SPECIALISTS CONFERENCE. IEEE, 22 June 1997, vol. 2, 861-868

- Online MTPA Control Strategy for DTC Synchronous-Reluctance-Motor Drives. **SILVERIO BOLOGNANI et al.** IEEE TRANSACTIONS ON POWER ELECTRONICS. INSTITUTE OF ELECTRICAL AND ELECTRONICS ENGINEERS, 01 January 2011, vol. 26, 20-28